(19) Europäisches Patentamt
European Patent Office
Office européen des brevets

(11) **EP 3 289 385 B1**

(12) **EUROPÄISCHE PATENTSCHRIFT**

(45) Veröffentlichungstag und Bekanntmachung des Hinweises auf die Patenterteilung:
**12.02.2020 Patentblatt 2020/07**

(51) Int Cl.:
*G01S 19/01* *(2010.01)*       *G01S 19/11* *(2010.01)*

(21) Anmeldenummer: **16718379.7**

(86) Internationale Anmeldenummer:
**PCT/EP2016/059264**

(22) Anmeldetag: **26.04.2016**

(87) Internationale Veröffentlichungsnummer:
**WO 2016/174018 (03.11.2016 Gazette 2016/44)**

(54) **VORRICHTUNG UND VERFAHREN ZUM ERZEUGEN UND BEREITSTELLEN VON POSITIONSINFORMATIONEN**

DEVICE AND METHOD FOR GENERATING AND PROVIDING POSITION INFORMATION

DISPOSITIF ET PROCÉDÉ PERMETTANT DE PRODUIRE ET DE FOURNIR DES INFORMATIONS DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2015 DE 102015005465**

(43) Veröffentlichungstag der Anmeldung:
**07.03.2018 Patentblatt 2018/10**

(73) Patentinhaber: **KATHREIN SE**
**83022 Rosenheim (DE)**

(72) Erfinder:
• **BIEBER, Robert**
**83024 Rosenheim (DE)**
• **MOHR, Markus**
**83022 Rosenheim (DE)**

(74) Vertreter: **Flach Bauer Stahl**
**Patentanwälte Partnerschaft mbB**
**Adlzreiterstraße 11**
**83022 Rosenheim (DE)**

(56) Entgegenhaltungen:
WO-A1-97/38326          WO-A1-2014/123809
WO-A2-2007/030384     JP-A- 2005 321 353

**Beschreibung**

Die Erfindung betrifft ein Verfahren und eine Vorrichtung zum Erzeugen und Bereitstellen von individuellen Positionsinformationen zur Ortsbestimmung auf Basis des globalen Navigationssatellitensystems (GNSS). Unter dem Begriff globales Navigationssatellitensystem werden die bereits bestehenden oder künftigen globalen Satellitensysteme zur Bestimmung von Ortsinformationen wie GPS (engl. global positioning system; dt. globales Positionssystem), GLONASS (engl. global navigation satellite system; dt. globales Navigationssatellitensystem), Galileo und Beidou verstanden.

Zur Positionsbestimmung arbeiten alle bekannten Systeme mittels Satelliten, die ein Navigationssignal, welches Informationen über den Sendezeitpunkt, den Sendeort und den jeweiligen Satelliten enthält, auf die Erde senden. Jeder Satellit sendet dabei sein eigenes spezifisches Navigationssignal aus, welches sich von den Navigationssignalen anderer Satelliten unterscheidet. Die Informationen über den Sendezeitpunkt geben eine genaue Uhrzeit an, zu der das Signal ausgesendet worden ist. Selbiges gilt auch für den Sendeort. Diese Informationen beinhalten die genauen Bahndaten, auf der sich der Satellit zum Sendezeitpunkt befindet. Mittels zumindest vier Satelliten, die unterschiedliche Navigationssignale aussenden, ist es einem Empfänger auf der Erde möglich, seinen genauen Standort aufgrund von Laufzeitunterschieden berechnen zu können.

Problematisch ist, dass es viele Orte gibt, bei denen die von den Satelliten abgestrahlten Navigationssignale nicht oder nur unzureichend empfangen werden, wodurch der Empfänger seine Position nicht oder nur sehr ungenau bestimmen kann. Insbesondere sind hier Innenräume von Gebäuden, wie Einkaufzentren oder Parkhäuser, sowie Tunnel, Schluchten, Höhlen und enge Straßenzüge, die von hohen Häusern umgeben werden, zu nennen.

Die Notwendigkeit zur genauen Positionsbestimmung ist einerseits wichtig, um auf dem kürzesten Weg zum gewünschten Ziel gelangen zu können. Andererseits ist eine solche Positionsbestimmung auch in Notfallsituationen wünschenswert, um Rettungskräften die Position des Verunglückten mitteilen können.

Um diese Probleme zu überwinden, ist es heute möglich, mittels unterschiedlichster technischer Lösungen in Gebäuden ortsbezogen zu navigieren. Man kann sich beispielsweise unterschiedlicher drahtloser Systeme/Netzwerke bedienen, welche zum Beispiel durch WLAN, Bluetooth und entsprechende Standards abgebildet werden. Die Position des Empfängers kann dabei beispielsweise mittels Leistungsmessung und Vergleich der kommunizierenden Signale durch Triangulation ermittelt werden. Es ist ebenfalls möglich, einzelne "Funkknoten" an bestimmten Orten zu platzieren, welche dem Empfänger in Kombination mit einer speziell für diesen Bereich zur Verfügung gestellten Karte die Ermittlung seines eigenen Standorts ermöglichen. Allerdings benötigen diese Verfahren zur Ortsbestimmung im Vergleich zu dem bekannten globalen Navigationssatellitensystem weitere Funktechnologien, mathematische Methoden und folglich zusätzliche Programme, welche beispielsweise erst auf dem Empfangsgerät installiert werden müssen.

Aus der WO 97/38326 A1 ist ein Positionssystem ein für Gebäude bekannt, wobei mehrere Antennen an unterschiedlichen Stellen eines Raums innerhalb des Gebäudes angeordnet sind. Für jede dieser Antennen wird von einem Computer ein einzelnes Positionssignal generiert und an die entsprechende Antenne übertragen. Die Antennen strahlen das ihnen zugeführte Positionssignal ab. Ein Empfänger empfängt die Positionssignale von zumindest drei Antennen und ist mit diesen Signalen in der Lage seine Position im Raum grob zu bestimmen.

Aus der WO 2007/030384 A2 ist ein System bekannt, mit dem GNSS-Signale an Orte abgestrahlt werden können, die keinen direkten Sichtkontakt zu Satelliten haben. Ein Emitter umfasst dabei einerseits die Elektronik zur Signalverarbeitung und andererseits die Antenne selbst. Insgesamt können mehrere dieser Emitter eingesetzt werden, wobei sie beispielsweise über das Internet Informationen über die gegenwärtigen Satellitenpositionen beziehen können. Die Erzeugung der Positionsinformationen erfolgt dabei dezentral durch jeden Emitter selbst.

Aus diesen Gründen wurden Lösungen erschaffen, welche auch außerhalb des unmittelbaren GNSS-Abdeckungsbereichs eine Ortsbestimmung ermöglichen. Aus der EP 2 233 943 A1 ist ein Verfahren zur Bereitstellung von Positionsinformationen mittels eines Innenraumsenders bekannt. Der Innenraumsender empfängt überlagerte Navigationssignale mehrerer Satelliten, welche von einem Empfänger außerhalb eines Gebäudes aufgezeichnet wurden. Der Innenraumsender erhält zusätzlich zu den empfangenen Navigationssignalen eine weitere Information, die seinen eigenen Standort angibt. Der Innenraumsender berechnet anhand der empfangenen Navigationssignale und seines eigenen Standorts in Abhängigkeit von dem Standort des Empfängers ein verändertes Positionssignal als Summe einzelner Navigationssignale und strahlt dieses aus.

Nachteilig an der EP 2 233 943 A1 ist, dass dem Innenraumsender zumindest vier einzelne Navigationssignale übermittelt werden müssen und dass der Innenraumsender diese Navigationssignale selbst weiterverarbeiten muss, um schlussendlich ein Navigationssignal abstrahlen zu können, welches unter Zuhilfenahme eines Empfangsgeräts den Ort des Innenraumsenders wiedergibt. Hierfür sind aufwendige und damit teure Innenraumsender notwendig.

Aufgabe ist es daher, ein Verfahren und eine Vorrichtung zu schaffen, mit denen auf möglichst einfache und kostengünstige Weise eine genaue Ortsbestimmung an den Orten ermöglicht wird, an denen ein direkter Empfang von Navigationssignalen von Navigationssatellitensystemen nicht möglich ist.

Die Aufgabe wird hinsichtlich des Verfahrens zum Erzeugen und Bereitstellen von individuellen Positionsinformationen zur Ortsbestimmung auf Basis des globalen Navigationssatellitensystems durch die Merkmale des Anspruchs 1 gelöst. Weiterhin wird die Aufgabe hinsichtlich der Vorrichtung zum Erzeugen und Bereitstellen von individuellen Positionsinformationen zur Ortsbestimmung auf Basis des globalen Navigationssatellitensystems durch die Merkmale des Anspruchs 8 gelöst. In den jeweiligen Unteransprüchen sind vorteilhafte Weiterbildungen des erfindungsgemäßen Verfahrens sowie der erfindungsgemäßen Vorrichtung angegeben.

Das erfindungsgemäße Verfahren und die erfindungsgemäße Vorrichtung zum Erzeugen und Bereitstellen von individuellen Positionsinformationen zur Ortsbestimmung auf Basis des globalen Navigationssatellitensystems sieht den Einsatz bzw. die Verwendung einer Aufbereitungseinheit und zumindest zwei oder zumindest drei oder zumindest vier oder zumindest fünf lokalen Positionssendern vor, wobei die lokalen Positionssender mit der Aufbereitungseinheit verbunden sind. Der Aufbereitungseinheit werden zumindest vier unterschiedliche Navigationssignale zugeführt, von denen jedes einem Satellitensignal auf Basis des globalen Navigationssatellitensystems entspricht. Bevorzugt enthält jedes dieser zumindest vier unterschiedlichen Navigationssignale zumindest Informationen über den Sendezeitpunkt und den Sendeort. Die Aufbereitungseinheit ist dazu ausgebildet, zumindest vier zielortsabhängige Navigationssignale durch zeitliche Verschiebung zumindest zweier, dreier oder vorzugsweise aller vier unterschiedlichen Navigationssignale zu erzeugen, wobei die daraus erzielbaren Zielortkoordinaten, also die Positionsinformationen auf Basis des globalen Navigationssatellitensystems dem beliebig wählbaren Zielort entsprechen. Diese zumindest vier zielortsabhängigen Navigationssignale werden durch die Aufbereitungseinheit zu einem veränderten Summennavigationssignal überlagert und an den jeweiligen lokalen Positionssender übermittelt. Dabei wird für jeden der lokalen Positionssender ein individuelles Summennavigationssignal erzeugt. Es ist dabei besonders vorteilhaft, dass zentral, also durch die Aufbereitungseinheit ein verändertes Summennavigationssignal erzeugt wird, welches auf den zumindest einen lokalen Positionssender übertragen wird. Dieser strahlt das veränderte Summennavigationssignal ab. Dies erlaubt, dass der zentrale Positionssender im einfachsten Fall einzig aus einer Rundstrahlantenne bestehen kann. Vorzugsweise handelt es sich bei dem Summennavigationssignal um ein digitales Signal, sodass der lokale Positionssender zumindest noch einen D/A-Wandler und optional einen Verstärker beinhaltet. Das digitale Summennavigationssignal kann dann über bekannte, insbesondere kabelgebundene Kommunikationskanäle, wie Ethernet (LAN/Internet), mittels bekannten Protokollen übertragen werden. Dabei können einige oder alle der lokalen Positionssender einen Teil der Übertragungsstrecke gemeinsam nutzen. Dies bedeutet, dass die individuellen Summennavigationssignale teilweise über denselben Kommunikationskanal hin zu den lokalen Positionssendern übertragen werden. Dadurch kann eine bereits bestehende Infrastruktur genutzt werden oder die Kosten für den Aufbau einer neuen Infrastruktur minimal gehalten werden. Die lokalen Positionssender können daher sehr kompakt und kostengünstig hergestellt werden.

Dieser erfindungsgemäße Aufbau ist auch vollkommen entgegengesetzt zu dem Aufbau aus der DE 10 2012 007 205 B4. In dieser Druckschrift wird eine dezentrale Erzeugung der zielortsabhängigen Navigationssignale gelehrt. Die zielortsabhängigen Navigationssignale werden dort erzeugt, wo sie auch abgestrahlt werden sollen. Diese Druckschrift lehrt dabei den Einsatz eines Positionssenders (Pseudolit), der zur Versorgung eines Bereichs mit eingeschränktem Empfang von GNSS-Navigationssignalen dient. Der gezeigte Pseudolit umfasst eine Signalerzeugungseinheit mit entsprechenden Verstärkern und genau einer Antenne. Die Signalerzeugungseinheit erzeugt mindestens drei Signale, die GNSS-Navigationssignalen von Satelliten nachgebildet sind, und sendet diese Signale mit der Antenne aus. Eine digitale Überlagerung der einzelnen zielortsabhängigen Navigationssignale findet nicht statt. Der Pseudolit wird als selbstständig arbeitende Einheit direkt dort installiert, wo ein Empfang wünschenswert ist. D.h., dass je Zielort jeweils ein Pseudolit zu platzieren ist. Eine Übertragung der zielortsabhängigen Navigationssignale über bereits bestehende oder neu anzulegende Kommunikationsnetze ist nicht vorgesehen. Der Ansatz zur Bereitstellung von GNSS-Positionsinformationen ist folglich genau umgekehrt zu demjenigen der hier vorliegenden Erfindung und stellt keine wirtschaftliche und skalierbare Lösung für multiple Zielorte dar.

Weiterhin müssen bei der vorliegenden Erfindung auch nicht alle Navigationssignale zeitlich verschoben werden. Je nach Satellitenkonstellation kann es nämlich unter Umständen sein, dass sich die Position des Zielortes nur bzgl. drei oder sogar nur bezgl. zwei der zumindest vier Satelliten verändert hat.

Weiterhin besteht ein Vorteil, wenn es sich innerhalb des erfindungsgemäßen Verfahrens und innerhalb der erfindungsgemäßen Vorrichtung bei dem Zielort um einen Ort handelt, der in Funkreichweite von dem jeweiligen lokalen Positionssender ($3_1$, $3_2$, $3_3$, ..., $3_n$) liegt. Die Tatsache, dass die Zielkoordinaten einem Zielort entsprechen, der einzig in Funkreichweite des zumindest einen lokalen Positionssenders liegt, erlaubt, dass die Zielkoordinaten beispielsweise die Mitte eines Raumes abbilden, wobei der lokale Positionssender am Rande des Raumes angeordnet ist. Dadurch wird die maximale Abweichung von der gemessenen Position zur tatsächlichen Position des Empfängers verringert.

Weiterhin besteht ein Vorteil, wenn das erfindungsgemäße Verfahren und die erfindungsgemäße Vorrichtung die Auswahl von zumindest vier Satelliten vorsieht, die sich im Orbit über dem Ort der angeschlossenen Positionssender befinden und wenn von diesen zumindest vier ausgewählten Satelliten zumindest vier reale Satellitensignale empfangen werden. Dabei ist es alternativ dazu auch möglich, dass zumindest vier künstliche Satellitensignale generiert werden, die den realen Satellitensignalen der zumindest vier ausgewählten Satelliten nachgebildet sind. Bei den zumindest vier empfangenen realen oder bei den zumindest vier empfangenen generierten Satellitensignalen handelt es sich um Navigationssignale, die auch die ausgewählten Satelliten aussenden. Es ist auch möglich, dass sowohl reale Satellitensignale, als auch künstlich generierte Satellitensignale gemeinsam, also gemischt verwendet werden, sofern in Summe zumindest vier verschiedene Satellitensignale vorliegen. Diese Satellitensignale, bei denen es sich um die Navigationssignale handelt, werden der Aufbereitungseinheit zur weiteren Verarbeitung zugeführt. Besonders vorteilhaft ist dabei, dass es möglich ist, zumindest vier Satelliten auszuwählen, die sich im Orbit über dem Ort der lokalen Positionssender befinden. Dies bedeutet, dass eine direkte Sichtverbindung (engl. line of sight) zwischen diesen Satelliten und dem Ort des zumindest einen Positionssenders möglich wäre, wenn beispielsweise keine Gebäudestrukturen im Weg wären. Die Satelliten stehen daher im Sichtfeld der lokalen Positionssender. Dadurch können durch die lokalen Positionssender Navigationssignale abgestrahlt werden, die denen nachgebildet sind, die ein Empfänger an der Position der lokalen Positionssender bei einem direkten Empfang der Navigationssignale dieser Satelliten auch empfangen würde. Dadurch wird eine "Verwirrung" des Empfangsgeräts (zum Beispiel eines GPS-Empfängers) vermieden, welches beispielsweise vor dem Betreten eines Gebäudes einen direkten Satellitenempfang hatte. Würde ein solches Empfangsgerät plötzlich vollkommen andere Satelliten empfangen, dann wäre seine Funktionalität für eine gewisse Zeitdauer von beispielsweise mehreren Minuten möglicherweise nicht mehr gewährleistet.

Weiterhin besteht bei dem erfindungsgemäßen Verfahren und bei der erfindungsgemäßen Vorrichtung ein Vorteil, wenn durch die Auswahleinheit einzig die Satelliten ausgewählt werden, die am weitesten voneinander entfernt sind und/oder die ein Satellitensignal aussenden, das in einem Winkel von mehr als 5°, bevorzugt mehr als 10°, weiter bevorzugt von mehr als 20° am Ort des lokalen Positionssenders zum Boden hin auftrifft. Dadurch ist gewährleistet, dass ein Empfangsgerät, mittels dem vom lokalen Positionssender ausgestrahlten, veränderten Summennavigationssignal, Positionsangaben erhält, mit denen auch die Höhe des Standorts genau bestimmt werden kann. Vorteilhaft ist dabei, dass es der Auswahleinheit ermöglicht wird, Satelliten nicht auszuwählen, deren Satellitensignale (also Navigationssignale) in einem Winkel von weniger als 20° oder weniger als 10° oder weniger als 5° hin zum Boden an der Position des lokalen Positionssenders auftreffen. Empfangsgeräte, wie beispielsweise GPS-Empfänger, würden derartige Satelliten oft nicht zur Positionsbestimmung heranziehen, weil ein derart flacher Auftreffwinkel in der Realität meist auf Fading hindeutet. Über die Auswahleinheit ist es auch möglich nur eine begrenzte Anzahl an Satelliten auszuwählen, die sich senkrecht oder nahezu senkrecht über dem Zielort im Orbit befinden. Beispielsweise kann festgelegt werden, dass von den zumindest vier ausgewählten Satelliten nur einer darunter sein kann, der sich senkrecht oder nahezu senkrecht im Orbit über dem Zielort befindet. Dadurch wird erreicht, dass die Aufbereitungseinheit einzig Navigationssignale weiterverarbeitet, die auch ein Empfangsgerät zur Positionsbestimmung nutzen würde.

Zusätzlich besteht bei dem erfindungsgemäßen Verfahren und der erfindungsgemäßen Vorrichtung ein Vorteil, wenn Informationen über einen Sendeort in dem Summennavigationssignal der zumindest vier Satelliten nicht älter sind, als 5 Minuten, bevorzugt nicht älter als 3 Minuten, weiter bevorzugt nicht älter als 1 Minute, weiter bevorzugt nicht älter als 30 Sekunden. Dabei ist es besonders vorteilhaft, wenn das durch die lokalen Positionssender jeweilige ausgestrahlte veränderte Summennavigationssignal Standortdaten der Satelliten in Form von Ephemeriden beinhaltet, die dem tatsächlichen Standort des Satelliten zum Zeitpunkt des Ausstrahlens des veränderten Summennavigationssignals, möglichst nahekommen. Die Ephemeriden erlauben dabei einen Rückschluss auf die genaue Position des Satelliten und beinhalten beispielsweise die Bahndaten des Satelliten. Veraltete Informationen über den Standort des Satelliten können dazu führen, dass manche Empfänger diese Satelliten nicht zur Standortbestimmung heranziehen. Dieses Problem besteht insbesondere dann, wenn ein Empfangsgerät zwischen einem direkten Empfang von Navigationssignalen zu einem indirekten Empfang von Navigationssignalen wechselt. Unter einem "direkteren Empfang" wird verstanden, dass das Empfangsgerät Navigationssignale direkt durch das globalen Navigationssatellitensystem erhält, wohingegen unter einem "indirekten Empfang" verstanden wird, dass das Empfangsgerät Navigationssignale im Sinne von veränderten Summennavigationssignalen erhält, die beispielsweise durch den zumindest einen lokalen Positionssender ausgesendet werden.

Weiterhin besteht bei dem erfindungsgemäßen Verfahren und der erfindungsgemäßen Vorrichtung ein Vorteil, wenn eine Empfangseinheit vorgesehen ist, die die zumindest vier realen Satellitensignale der zumindest vier ausgewählten Satelliten empfängt und wenn diese Empfangseinheit mit der Aufbereitungseinheit verbunden ist, wobei es sich bei der zumindest einen Empfangseinheit um eine Richtantenne und/oder ein Antennenarray und/oder einen Spiegel und/oder eine Mikrowellenlinse handelt oder wobei es sich bei der Empfangseinheit um einen Signalgenerator handelt. Insbesondere der Einsatz einer Richtantenne und/oder eines Antennenarrays und/oder eines Spiegels und/oder einer Mikrowellenlinse erlauben einen störungsfreien Empfang von realen Satellitensignalen, also realen Navigationssignalen, die bevorzugt nicht durch andere Signale überlagert sind. Der Einsatz eines Signalgenerators erlaubt, dass ein künstliches Satellitensignal, also ein künstliches Navigationssignal, welches den realen Satellitensignalen der zumindest vier ausgewählten Satelliten nachgebildet ist, generiert werden kann.

Weiterhin besteht ein Vorteil, wenn das erfindungsgemäße Verfahren und die erfindungsgemäße Vorrichtung zumindest vier Antennenarrays und/oder zumindest vier Richtantennen und/oder zumindest vier Spiegel und/oder zumindest vier Mikrowellenlinsen aufweist und wenn eine Steuereinheit vorhanden ist, die diese vier Antennenarrays und/oder die zumindest vier Richtantennen und/oder die zumindest vier Spiegel und/oder die zumindest vier Mikrowellenlinsen auf die ausgewählten zumindest vier Satelliten hin ausrichtet und diesen nachführt. Je eines der zumindest vier Antennenarrays kann beispielsweise mittels Beamforming auf je einen der zumindest vier ausgewählten Satelliten ausgerichtet werden und diesem nachgeführt werden. Auch beim Einsatz von Richtantennen und/oder Spiegeln und/oder Mikrowellenlinsen ist dies mittels einer Ausricht- und Nachführeinheit möglich, die vorzugsweise Schrittmotoren umfasst. Besonders vorteilhaft ist dabei, dass einzelne Satellitensignale, also einzelne Navigationssignale, empfangen werden und kein Summennavigationssignal am Ort der Empfangseinheit vorliegt, welches wieder aufgespalten werden müsste. Die einzelnen Satellitensignale, also die einzelnen Navigationssignale können bei Bedarf verstärkt und separat der Aufbereitungseinheit zugeführt werden. Die Aufbereitungseinheit kann dann die einzelnen Navigationssignale individuell zeitlich verschieben und anschließend überlagern und so den lokalen Positionssendern ein individuell generiertes Summennavigationssignal zuführen.

Ein weiterer erfindungsgemäßer Vorteil besteht, wenn das Verfahren und die Vorrichtung einen GNSS-Empfänger aufweisen, der mit der Steuereinheit verbunden ist und Standortdaten, also Almanach und/oder Ephemeriden für die zumindest vier ausgewählten Satelliten an die Steuereinheit übermittelt. Dies erlaubt der Steuereinheit die genaue Ausrichtung und das genaue Nachführen jedes Empfängers auf den entsprechenden Satelliten. Weiterhin besteht ein Vorteil, wenn für die zumindest vier ausgewählten Satelliten Standortdaten aus einer mit der Steuereinheit verbundenen Speichereinheit an diese übermittelt werden. Bei einer solchen Speichereinheit kann es sich um eine lokale Datenbank handeln oder um eine solche, die über das Internet zugänglich ist und über die in Echtzeit die aktuellen Bahndaten, also die Standortdaten des Satelliten abgerufen werden können. Der Steuereinheit ist es dadurch möglich, die Empfänger auf den jeweiligen Satelliten genau auszurichten.

Außerdem besteht bei dem erfindungsgemäßen Verfahren und bei der erfindungsgemäßen Vorrichtung ein Vorteil, wenn zumindest einer der lokalen Positionssender Teil einer Sende- / Empfangseinheit ist, die wiederum Teil einer Mobilfunkbasisstation ist und/oder wenn es sich bei der Verbindung zwischen der Aufbereitungseinheit und zumindest einem der lokalen Positionssender um eine Verbindung handelt, mit der die Sende- / Empfangseinheit einer Mobilfunkbasisstation mit Daten versorgt wird. Vorzugsweise sind die lokalen Positionssender zumindest teilweise über eine gemeinsam genutzte (insbesondere kabelgebundene) Datenverbindung, wie Ethernet, mit der Aufbereitungseinheit verbunden. Dies erlaubt die einfache Integration eines lokalen Positionssenders in ein bestehendes Mobilfunknetz, welches beispielsweise innerhalb von Gebäuden aufgebaut wird und dort für den Empfang sorgt oder in eine bereits bestehende Netztopologie. Bereits vorhandene Leitungen und/oder Antennen können auch zur Übermittlung von Positionsdaten, also von dem veränderten Summennavigationssignal benutzt werden.

Letztlich besteht bei dem erfindungsgemäßen Verfahren und der erfindungsgemäßen Vorrichtung ein Vorteil, wenn die Auswahleinheit für die Generierung des geänderten Summennavigationssignals für den ersten lokalen Positionssender und für jeden weiteren lokalen Positionssender vollständig oder zumindest teilweise unterschiedliche Satelliten auswählt. Dadurch können sich Bereiche, in denen die lokalen Positionssender das veränderte Summennavigationssignal abstrahlen, auch teilweise überlappen, ohne dass es zu Fading kommt. Dies liegt daran, weil die lokalen Positionssender disjunkte Summennavigationssignale abstrahlen, wodurch mehrere lokale Positionssender nebeneinander koexistieren können, ohne dass es zur Auslöschung, also Überlagerung von gleichen Signalen mit unterschiedlicher Phase, kommt. Bei dem Einsatz eines einzigen lokalen Positionssenders kann es dagegen aufgrund von Reflexionen zu Auslöschungen und damit "Funklöchern" kommen. In diesem Fall wäre es vorteilhaft, wenn der lokale Positionssender mehrere Antennen aufweist, wobei das veränderte Summennavigationssignal abwechselnd über die verschiedenen Antennen ausgesendet werden sollte oder wobei dem lokalen Positionssender für jede Antenne ein eigenes verändertes Summennavigationssignal übermittelt werden sollte, wobei die für jedes veränderte Summennavigationssignal ausgewählten Satelliten vollständig oder teilweise unterschiedlich sein sollten.

Verschiedene Ausführungsbeispiele der Erfindung werden nachfolgend unter Bezugnahme auf die Zeichnungen beispielhaft beschrieben. Gleiche Gegenstände weisen dieselben Bezugszeichen auf. Die entsprechenden Figuren der Zeichnung zeigen im Einzelnen:

Figur 1: ein Übersichtsschaltbild über die erfindungsgemäße Vorrichtung zum Erzeugen und Bereitstellen von individuellen Positionsinformationen zur Ortsbestimmung;

Figur 2: ein weiteres Übersichtsschaltbild über die erfindungsgemäße Vorrichtung zum Erzeugen und Bereitstellen von individuellen Positionsinformationen zur Ortsbestimmung;

Figur 3: ein weiteres Übersichtsschaltbild der erfindungsgemäßen Vorrichtung, das erläutert, dass die individuellen Summennavigationssignale über gemeinsame, mit anderen Diensten genutzte Transportkanäle, wie z.B. das Internet, an die lokalen Positionssender übermittelt werden können;

Figur 4: eine vereinfachte Darstellung, welche Satelliten am Firmament durch eine Auswahleinheit ausgewählt werden;

Figur 5:     eine vereinfachte Darstellung, die verdeutlicht, wie ein verändertes Summennavigationssignal erzeugt und an verschiedene lokale Positionssender innerhalb verschiedener Zimmer übermittelt wird; und

Figur 6:     ein Flussdiagramm, welches die Erzeugung eines Summennavigationssignals erläutert.

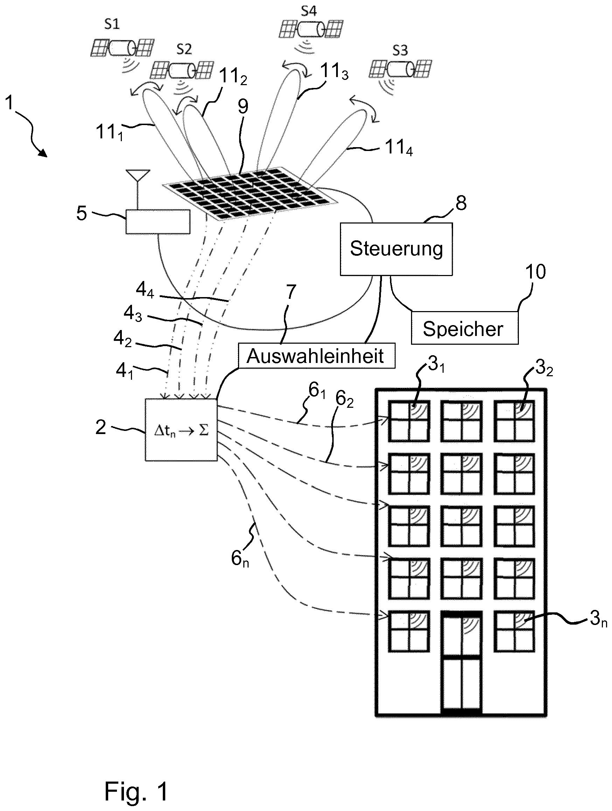

Figur 1 zeigt ein Übersichtsschaltbild über die erfindungsgemäße Vorrichtung 1 zum Erzeugen und Bereitstellen von individuellen Positionsinformationen zur Ortsbestimmung. Die Vorrichtung 1 umfasst zumindest eine Aufbereitungseinheit 2 und zumindest einen lokalen Positionssender $3_1$, $3_2$, ..., $3_n$. Vorzugsweise werden zumindest zwei oder zumindest drei oder zumindest vier oder zumindest fünf lokale Positionssender $3_1$, $3_2$, ..., $3_n$ eingesetzt. Bei den lokalen Positionssender $3_1$, $3_2$, ..., $3_n$ handelt es sich vorzugsweise um "aktive" Positionssender $3_1$, $3_2$, ..., $3_n$, die noch einen D/A-Wandler und ggf. einen Verstärker und ggf. ein Filter aufweisen. Die Aufbereitungseinheit 2 ist mit den lokalen Positionssendern $3_1$, $3_2$, ..., $3_n$ verbunden. Diese Verbindung kann zum Beispiel digital über bestehende IT-Infrastrukturen, wie Ethernet, oder aber auch über weitere Netzwerke anderer Technologien erfolgen. Bei der Verbindung kann es sich auch um eine solche Verbindung handeln, mit der auch Sende- / Empfangseinheiten, die Teil einer Mobilfunkbasisstation sind, mit Daten versorgt werden. Dabei wird bevorzugt eine vermittlungsorientierte Verbindung eingesetzt. Eine analoge Verbindung über Koaxialleitungen und/oder Glasfaserleitungen ist ebenfalls möglich.

Der Aufbereitungseinheit 2 werden zumindest vier unterschiedliche Navigationssignale $4_1$, $4_2$, $4_3$, $4_4$ zugeführt, von denen jedes im Wesentlichen einem Satellitensignal auf Basis des globalen Navigationssatellitensystems entspricht. Jedes dieser vier unterschiedlichen Navigationssignale $4_1$, $4_2$, $4_3$, $4_4$ beinhaltet bevorzugt Informationen über den Sendezeitpunkt, den Sendeort und den Satelliten S1, S2, S3, S4 selbst. Die Informationen, die den Sendeort betreffen, beinhalten beispielsweise die Ephemeriden-Daten und optional noch die Almanach-Daten. Die Ephemeriden-Daten geben dabei die genaue Bahn, also den genauen Ort des Satelliten an, wo er im Orbit zu finden ist. Die Almanach-Daten beinhalten noch zusätzliche grobe Positionsangaben über die sich im Orbit über dem Ort des zumindest einen lokalen Positionssenders $3_1$, $3_2$, ..., $3_n$ allgemein befindlichen Satelliten. Unter dem Wort "Orbit" wird der Bereich des Sternenhimmels bezeichnet, in dem sich die GNSS-Satelliten S1, S2, S3, S4 bewegen und in dem die GNSS-Satelliten S1, S2, S3, S4 ein Satellitensignal aussenden, das von einem Empfangsgerät am Boden empfangbar ist. Bevorzugt trifft das Satellitensignal unter einem Winkel von mehr als 5°, bevorzugt von mehr 10°, weiter bevorzugt von mehr als 20° auf einem Punkt am Boden auf. Ein GNSS-Empfänger 5 oder ein Empfangsgerät im Allgemeinen kann daher ein Satellitensignal von Satelliten S1, S2, S3, S4 empfangen, die sich im Orbit über seinem Ort befinden. Unter "Ort" ist dabei zu verstehen, dass die Satelliten S1, S2, S3, S4 eine Sichtverbindung zu dem GNSS-Empfänger 5 haben oder hätten, wenn keine Hindernisse wie beispielsweise Häuser im weg wären. Die von den Satelliten S1, S2, S3, S4 ausgesendeten Satellitensignale, also Navigationssignale $4_1$, $4_2$, $4_3$, $4_4$ werden von den Empfangsgeräten empfangen. Anhand von Laufzeitunterschieden zwischen den zueinander synchronisierten Satellitensignalen und der bekannten Position der Satelliten S1, S2, S3, S4 im Orbit kann die aktuelle Position bestimmt werden. Dies gelingt über das unten ausgeführte, nichtlineare Gleichungssystem:

$$(x_1 - x_0)^2 + (y_1 - y_0)^2 + (z_1 - z_0)^2 = [c(t_1 - t_0)]^2 \quad (1)$$

$$(x_2 - x_0)^2 + (y_2 - y_0)^2 + (z_2 - z_0)^2 = [c(t_2 - t_0)]^2 \quad (2)$$

$$(x_3 - x_0)^2 + (y_3 - y_0)^2 + (z_3 - z_0)^2 = [c(t_3 - t_0)]^2 \quad (3)$$

$$(x_4 - x_0)^2 + (y_4 - y_0)^2 + (z_4 - z_0)^2 = [c(t_4 - t_0)]^2 \quad (4)$$

Dieses Gleichungssystem beschreibt die Situation beim Empfang der Signale von beispielsweise vier Satelliten, mit den Koordinaten $S1(x_1, y_1, z_1)$, $S2(x_2, y_2, z_2)$, $S3(x_3, y_3, z_3)$ und $S4 (x_4, y_4, z_4)$. Die zur zielortsabhängigen Abbildung benötigten, individuellen zeitlichen Verzögerungen $\Delta t_1$, $\Delta t_2$, $\Delta t_3$, $\Delta t_4$ können durch Lösung dieses Gleichungssystems für den Zielort $(x_0, y_0, z_0)$ ermittelt werden.

Bei allen Satelliten S1, S2, S3 und S4 handelt es sich um GNSS-Satelliten S1, S2, S3 und S4, die ein Satellitensignal aussenden, welches GNSS-Empfänger 5 oder allgemeine Empfangsgeräte zur Positionsbestimmung nutzen.

Die Navigationssignale $4_1$, $4_2$, $4_3$, $4_4$, die der Aufbereitungseinheit 2 zugeführt werden, werden durch diese derart verändert, dass dadurch zumindest vier zielortsabhängige Navigationssignale erzeugt werden, wobei die daraus erzielbaren Zielortkoordinaten, also die Positionsinformationen auf Basis des globalen Navigationssatellitensystems beispielsweise dem Ort des zumindest einen lokalen Positionssender $3_1$, $3_2$, ..., $3_n$ entsprechen. Dies bedeutet, dass zur erfindungsgemäßen Abbildung eines Ortes (Zielort) in den Abbildungsraum eines GNSS-Systems einzelne Satellitensignale, also Navigationssignale $4_1$, $4_2$, $4_3$, $4_4$ entsprechend der Zielortkoordinaten so relativ zueinander verzögert bzw. (zeitlich) verschoben werden, dass das veränderte Summennavigationssignal $6_1$, $6_2$, ..., $6_n$, d.h. die Überlagerung der verschobenen Einzelsignale, dem Zielort entspricht. Dabei müssen nicht alle der zumindest vier Satellitensignale, also alle Navigationssignale $4_1$, $4_2$, $4_3$, $4_4$ zeitlich verschoben werden. Je nach aktueller Position der Satelliten S1, S2, S3 und S4 im Orbit kann es unter Umständen sein, dass sich der Zielort nur in Relation zu zwei oder drei der zumindest vier Satelliten S1, S2, S3 und S4 geändert hat und von daher nur die Navigationssignale $4_1$, $4_2$, $4_3$, $4_4$ bzgl. dieser Satelliten zeitlich verschoben werden müssen.

Der Zielort, der sich aus der Positionsbestimmung anhand des empfangenen veränderten Summennavigationssignals $6_1$, $6_2$, ..., $6_n$ ergibt, muss nicht zwangsläufig mit dem Ort übereinstimmen, an dem sich der zumindest eine lokale Positionssender $3_1$, $3_2$, ..., $3_n$ befindet. Beispielsweise kann der Zielort der Abbildung räumlich gesehen in der Mitte eines Raumes definiert werden, um so die Genauigkeit bei der Ortsbestimmung zu erhöhen.

Die Aufbereitungseinheit 2 überlagert im Weiteren die zumindest vier zielortabhängigen Navigationssignale zu einem veränderten Summennavigationssignal $6_1$, $6_2$, ..., $6_n$. Ein verändertes Summennavigationssignal $6_1$, $6_2$, ..., $6_n$ wird dabei genau einem lokalen Positionssender $3_1$, $3_2$, ..., $3_n$ zugeführt. Dies bedeutet, dass die Aufbereitungseinheit 2 das veränderte Summennavigationssignal $6_1$, $6_2$, ..., $6_n$ individuell für jeden lokalen Positionssender $3_1$, $3_2$, ..., $3_n$ generiert. Dabei werden die einzelnen Navigationssignale $4_1$, $4_2$, $4_3$, $4_4$, die die Sendezeitpunkte enthalten, individuell - bezogen auf den jeweiligen Standort des lokalen Positionssenders $3_1$, $3_2$, ..., $3_n$ - zeitlich verschoben. Natürlich können die Zielortkoordinaten auf Basis des globalen Navigationssatellitensystems des veränderten Summennavigationssignals $6_1$, $6_2$, ..., $6_n$ auch einem Zielort entsprechen, der in Funkreichweite des zumindest einen lokalen Positionssenders $3_1$, $3_2$, ..., $3_n$ liegt. Dies bedeutet, dass die Aufbereitungseinheit 2 dazu ausgebildet ist, für jeden angeschlossenen lokalen Positionssender $3_1$, $3_2$, ..., $3_n$ ein individuell angepasstes verändertes Summennavigationssignal $6_1$, $6_2$, ..., $6_n$ zu generieren. Der Standort des lokalen Positionssenders $3_1$, $3_2$, ..., $3_n$ ist der Aufbereitungseinheit 2 ebenso bekannt, wie der Bereich, indem der lokale Positionssender $3_1$, $3_2$, ..., $3_n$ von einem Empfangsgerät empfangen werden kann. Der Zielort kann prinzipiell auch beliebig und unabhängig von der tatsächlichen Position des lokalen Positionssenders $3_1$, $3_2$, ..., $3_n$ gewählt werden.

Die erfindungsgemäße Vorrichtung 1 weist ebenfalls noch eine Auswahleinheit 7, eine Steuereinheit 8 und zumindest eine Empfangseinheit 9 auf. Die Aufbereitungseinheit 2 ist dabei mit der Auswahleinheit 7 verbunden. Die Empfangseinheit 9, die zum Empfang von Satellitensignalen geeignet ist, ist ebenfalls mit der Aufbereitungseinheit 2 verbunden. Die Empfangseinheit 9 wird dabei von einer Steuereinheit 8, mit der sie verbunden ist und die nachfolgend noch erläutert wird, gesteuert. Die Auswahleinheit 7 ist ebenfalls mit der Steuereinheit 8 verbunden. Die Steuereinheit 8 ist optional noch mit einem GNSS-Empfänger 5 verbunden. Die Verbindungen sind vorzugsweise kabelgebunden.

Die Auswahleinheit 7 ist dazu ausgebildet, zumindest vier Satelliten S1, S2, S3, S4 auszuwählen, die sich im Orbit über dem Ort des zumindest einen lokalen Positionssenders $3_1$, $3_2$, ..., $3_n$ befinden. Die Informationen, welche Satelliten S1, S2, S3, S4 ausgewählt werden können, erhält die Auswahleinheit 7 beispielsweise von dem GNSS-Empfänger 5. Der GNSS-Empfänger 5 ist derart angeordnet, dass er die Satellitensignale der sich im Orbit, also im Sichtfeld über seinem Ort befindlichen Satelliten S1, S2, S3, S4 direkt empfangen kann. Beispielsweise ist der GNSS-Empfänger 5 auf dem Dach eines Gebäudes angebracht. Anhand der empfangenen Satellitensignale kann der GNSS-Empfänger 5 ermitteln, welche Satelliten S1, S2, S3, S4 sich überhaupt im Sichtbereich befinden. Hierzu wertet er u.a. die Almanach-Daten aus. Die Information über die sich im Orbit über seinem Ort befindlichen Satelliten S1, S2, S3, S4, sowie deren Standort, übermittelt der GNSS-Empfänger 5 an die Auswahleinheit 7. Diese Übermittlung erfolgt in dem Ausführungsbeispiel aus Figur 1 indirekt über die Steuereinheit 8 an die Auswahleinheit 7. Der GNSS-Empfänger 5 kann die Information allerdings auch direkt an die Auswahleinheit 7 übermitteln.

Optional oder alternativ dazu ist die Auswahleinheit 7 noch mit einer Speichereinheit 10 verbunden. Bei der Speichereinheit 10 handelt es sich um eine lokale Datenbank oder um eine, die über das Internet erreichbar ist. In der Datenbank sind die Standorte der Satelliten S1, S2, S3, S4 zu einer genauen Zeit eingetragen, die zu einer bestimmten Zeit im Orbit über dem Ort des zumindest einen lokalen Positionssenders $4_1$, $4_2$, $4_3$, $4_4$ zu sehen sind. Diese Informationen, bei denen es sich beispielsweise um Almanach-Daten oder um die genaueren Ephemeriden-Daten handelt, werden an die Auswahleinheit 7 übertragen.

Die Auswahleinheit 7 wählt dabei bevorzugt diejenigen Satelliten S1, S2, S3, S4 aus, die am weitesten voneinander entfernt sind. Dadurch kann ein Empfangsgerät seine Position am genauesten bestimmen. Dies gilt insbesondere für die Höheninformation am Ort des zumindest einen Positionssenders $3_1$, $3_2$, ..., $3_n$. Die Auswahleinheit 7 kann auch einzig diejenigen der zumindest vier Satelliten S1, S2, S3, S4 auswählen, die ein Satellitensignal aussenden, das in einem Winkel von mehr als 5°, bevorzugt von mehr als 10° und weiter bevorzugt von mehr als 20° am Ort des lokalen Positionssenders $3_1$, $3_2$, ..., $3_n$ zum Boden hin auftrifft. Wie bereits erläutert, berücksichtigen einige Empfangsgeräte Satellitensignale nicht, die in einem zu flachen Winkel auftreffen, weil dies häufig auf Fading hindeutet und dadurch keine hochgenauen Messungen möglich sind. Es sollten auch keine oder nur wenige Satelliten S1, S2, S3 ausgewählt werden, die sich nahezu senkrecht, bzw. lotrecht über dem Ort des lokalen Positionssenders $3_1$, $3_2$, ..., $3_n$ befinden.

Die Auswahleinheit 7 wählt außerdem bevorzugt diejenigen Satelliten S1, S2, S3, S4 aus, die möglichst gleichmäßig zueinander angeordnet sind. Unter einer "möglichst gleichmäßigen Anordnung" kann verstanden werden, dass die ausgewählten zumindest vier Satelliten S1, S2, S3, S4 an den Ecken eines Rechtecks, insbesondere eines Quadrats angeordnet sind. Beispielsweise können bevorzugt diejenigen Satelliten ausgewählt werden, für die die Fläche des Rechtecks am größten wird. Die Satelliten S1, S2, S3, S4 können sich auch an den Ecken eines Würfels oder einer dreiseitigen Pyramide befinden.

Die Auswahleinheit 7 teilt der Steuereinheit 8 und optional der Aufbereitungseinheit 2 die zumindest vier ausgewählten Satelliten S1, S2, S3, S4 mit. Die Empfangseinheit 9 erfasst die Satellitensignale der durch die Auswahleinheit 7 ausgewählten zumindest vier Satelliten S1, S2, S3, S4 und leitet diese der Aufbereitungseinheit 2 weiter. Die Empfangseinheit 9 leitet daher bevorzugt vier einzelne Satellitensignale, also vier einzelne Navigationssignale $4_1$, $4_2$, $4_3$, $4_4$, bevorzugt parallel an die Aufbereitungseinheit 2 weiter. Bei diesen vier einzelnen Navigationssignalen $4_1$, $4_2$, $4_3$, $4_4$ handelt es sich bevorzugt um keine überlagerten Navigationssignale. Die Aufbereitungseinheit 2 verschiebt die einzelnen Navigationssignale $4_1$, $4_2$, $4_3$, $4_4$ zeitlich so, dass ein sich daraus ergebendes verändertes Summennavigationssignal $6_1$, $6_2$, ..., $6_n$ den Zielort des entsprechenden zumindest einen lokalen Positionssenders $3_1$, $3_2$, ..., $3_n$ widerspiegelt. Das veränderte Summennavigationssignal $6_1$, $6_2$, ..., $6_n$ kann auch einen Zielort widerspiegeln, der sich in Funkreichweite des lokalen Positionssenders $3_1$, $3_2$, ..., $3_n$ befindet oder beliebig gewählt ist, wobei an dem tatsächlichen Zielort, der dem gewählten entspricht, die Navigationssignale $4_1$, $4_2$, $4_3$, $4_4$ der ausgewählten Satelliten S1, S2, S3, S4 zu dieser Zeit empfangbar sein müssen.

Es wäre auch möglich, dass die zumindest eine Empfangseinheit 9 ein Summennavigationssignal, welches eine Überlagerung der einzelnen Navigationssignale $4_1$, $4_2$, $4_3$, $4_4$ der zumindest vier ausgewählten Satelliten S1, S2, S3, S4 beinhaltet, an die Aufbereitungseinheit 2 weiterleitet. Ein solches Summennavigationssignal würde durch die Aufbereitungseinheit 2 in die einzelnen Navigationssignale $4_1$, $4_2$, $4_3$, $4_4$ dekodiert werden. Im Anschluss daran würden die einzelnen Navigationssignale $4_1$, $4_2$, $4_3$, $4_4$ entsprechend zueinander zeitlich verschoben werden.

Bevorzugt wird allerdings kein Summennavigationssignal durch die zumindest eine Empfangseinheit 9 an die Aufbereitungseinheit 2 weitergeleitet. Stattdessen umfasst die zumindest eine Empfangseinheit 9 zumindest vier Antennenarrays und/oder zumindest vier Richtantennen und/oder zumindest vier Spiegel und/oder zumindest vier Mikrowellenlinsen. Die Steuereinheit 8 ist dazu ausgebildet, um die zumindest vier Antennenarrays und/oder die zumindest vier Richtantennen und/oder die zumindest vier Spiegel und/oder die zumindest vier Mikrowellenlinsen auf die durch die Auswahleinheit 7 ausgewählten zumindest vier Satelliten S1, S2, S3, S4 auszurichten und diesen nachzuführen. Eine solche Nachführung ist notwendig, denn bei den GNSS-Satelliten S1, S2, S3, S4 handelt es sich um keine geostationären Satelliten. Dies bedeutet, dass sich die Position der GNSS-Satelliten S1, S2, S3, S4 ständig ändert, wobei die genauen Bahndaten über die Ephemeriden-Daten der Steuereinheit 8 zugeführt werden.

Für den Fall, dass es sich bei der zumindest einen Empfangseinheit 9 um zumindest vier Antennenarrays handelt, ist die Steuereinheit 8 derart ausgebildet, dass sie jedes der zumindest vier Antennenarrays mittels BeamForming auf je einen der durch die Auswahleinheit 7 ausgewählten zumindest vier Satelliten S1, S2, S3, S4 ausrichtet und diesen nachführt. Dies bedeutet, dass ein Beam $11_1$ des Antennenarrays genau auf einen der zumindest vier ausgewählten Satelliten S1, S2, S3, S4 gerichtet ist. Ein zweiter Beam $11_2$ eines weiteren Antennenarrays ist auf einen zweiten Satelliten S2 gerichtet. Das Gleiche gilt für einen dritten Beam $11_3$ und einen vierten Beam $11_4$ der weiteren Antennenarrays, die auf einem dritten bzw. vierten Satelliten S3, S4 gerichtet sind. Diese Art der Nachführung erfolgt ausschließlich elektronisch und ist daher unabhängig von etwaigen Witterungsbeeinflussungen.

Es ist auch möglich, dass die Empfangseinheit 9 zumindest vier Richtantennen und/oder zumindest vier Spiegel und/oder zumindest vier Mikrowellenlinsen aufweist. Deren Ausrichtung erfolgt mechanisch, beispielsweise mittels einer nicht dargestellten Ausricht- und Nachführeinheit, welche mehrere Schrittmotoren umfassen kann. Über diese Schrittmotoren können die zumindest vier Richtantennen und/oder die zumindest vier Spiegel und/oder die zumindest vier Mikrowellenlinsen im Raum gedreht werden.

Wichtig ist, dass das geänderte Summennavigationssignal $6_1$, $6_2$, ..., $6_n$, welches die Aufbereitungseinheit 2 erzeugt, valide Daten enthält. Unter dem Begriff "valide Daten" wird verstanden, dass die einzelnen Navigationssignale $4_1$, $4_2$, $4_3$, $4_4$, die der Aufbereitungseinheit 2 zugeführt werden, Informationen, wie z.B. den Sendezeitpunkt, den Sendeort und den Satelliten S1, S2, S3, S4 enthalten, nicht älter sind als fünf Minuten, weiter bevorzugt nicht älter sind als drei Minuten, weiter bevorzugt nicht älter sind als eine Minute, weiter bevorzugt nicht älter sind als 30 Sekunden. Dies bedeutet, dass die Navigationssignale $4_1$, $4_2$, $4_3$, $4_4$, die der Aufbereitungseinheit 2 zugeführt werden, dabei den durch die Satelliten S1, S2, S3 und S4 ausgesendeten Navigationssignalen $4_1$, $4_2$, $4_3$, $4_4$ entsprechen, wie diese vor weniger als 30 Sekunden, oder weniger als einer, oder drei oder fünf Minuten am Ort des lokalen Positionssenders $3_1$, $3_2$, ..., $3_n$ bei einem direkten Empfang empfangen hätten werden können. Das geänderte Summennavigationssignal $6_1$, $6_2$, ..., $6_n$, welches durch den zumindest einen lokalen Positionssender $3_1$, $3_2$, ..., $3_n$ ausgestrahlt wird, entspricht demjenigen, welches am Ort des lokalen Positionssenders $3_1$, $3_2$, ..., $3_n$ oder in Funkreichweite des lokalen Positionssenders $3_1$, $3_2$, ..., $3_n$ und damit in der Nähe zu dem lokalen Positionssender $3_1$, $3_2$, ..., $3_n$ direkt von den Satelliten S1, S2, S3, S4 empfangbar wäre, wenn keine Hindernisse im Weg wären.

Zu diesen "validen Daten" zählen die Ephemeriden-, Almanach- und Positionsdaten als Teilinformationen der Navigationssignale $4_1$, $4_2$, $4_3$, $4_4$.

Die Funkreichweite des lokalen Positionssenders $3_1$, $3_2$, ..., $3_n$ entspricht dabei bevorzugt der Raumgröße des Raumes, der durch den lokalen Positionssender $3_1$, $3_2$, ..., $3_n$ versorgt wird.

Die zeitlichen Verschiebungen der einzelnen Navigationssignale $4_1$, $4_2$, $4_3$, $4_4$, zueinander, welche zur Erzeugung des geänderten Summennavigationssignals $6_1$, $6_2$, ..., $6_n$ benötigt werden, werden in der Aufbereitungseinheit 2 bevorzugt alle 5 Minuten, weiter bevorzugt alle 3 Minuten, weiter bevorzugt jede Minute, weiter bevorzugt alle 30 Sekunden erneut generiert.

Dies bedeutet, dass ein Empfänger, der von außerhalb ein Gebäude betritt, in welchem zumindest ein lokaler Positionssender $3_1$, $3_2$, ..., $3_n$ installiert ist, keinen Unterschied zwischen der Aktualität der empfangenen Navigationssignale $4_1$, $4_2$, $4_3$, $4_4$ außerhalb und innerhalb des Gebäudes bemerkt.

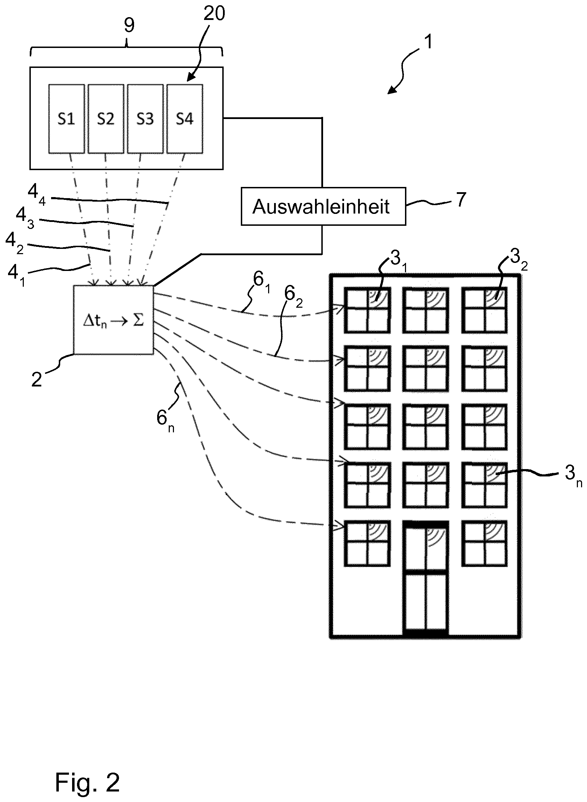

Die durch die Aufbereitungseinheit 2 erzeugten und durch den zumindest einen lokalen Positionssender $3_1$, $3_2$, ..., $3_n$ abgestrahlten veränderten Summennavigationssignale $6_1$, $6_2$, ..., $6_n$ sind bevorzugt zu den Satellitensignalen, welche außerhalb eines Gebäudes direkt von den Satelliten S1, S2, S3, S4 empfangen werden können, synchronisiert. Hier wird das veränderte Summennavigationssignal $6_1$, $6_2$, ..., $6_n$ demjenigen, welches beispielsweise außerhalb des Gebäudes direkt empfangbar wäre, so ähnlich wie möglich gemacht. Dadurch verringert man die Möglichkeit, dass ein Empfangsgerät, beispielsweise ein GPS-Empfänger, Performanceverluste erleidet, welche auf unübliche Signaleigenschaften zurückzuführen sind. Hierzu besitzt die Aufbereitungseinheit 2 die Möglichkeit, systemgegebene Signallaufzeiten als Folge der Signalübertragung vom Ort der Signal-Erzeugung, also vom Standort der Aufbereitungseinheit 2 bis hin zum Abstrahlort, also dem Ort des zumindest einen lokalen Positionssenders $3_1$, $3_2$, ..., $3_n$ auszugleichen. Hierzu wird bei der Erzeugung des geänderten Summennavigationssignals ein Zeitpunkt gewählt, der geringfügig in der Zukunft liegt. Dies ist mindestens die Zeit, die für die Signalerzeugung und für die längste Signallaufzeit des geänderten Summennavigationssignals zum lokalen Positionssender $3_1$, $3_2$, ..., $3_n$ benötigt wird. Hierzu sollten die einzelnen Navigationssignale $4_1$, $4_2$, $4_3$, $4_4$ künstlich, beispielsweise mittels eines Signalgenerators 20, wie er in Figur 2 dargestellt ist, generiert werden. Durch diese Maßnahme erkennt ein normaler Empfänger, der sich von außerhalb eines Gebäudes in dieses hineinbewegt, nicht, dass er keinen direkten Empfang der Satellitensignale mehr hat, sondern einzig und allein nur noch die geänderten Summennavigationssignale $6_1$, $6_2$, ..., $6_n$ empfängt, die über den zumindest einen lokalen Positionssender $3_1$, $3_2$, ..., $3_n$ ausgestrahlt werden.

Zur Verringerung der durch Fading verursachten "Funklöcher" können auf mehreren örtlich voneinander getrennten Antennen des zumindest einen lokalen Positionssenders $3_1$, $3_2$, ..., $3_n$ disjunkte Mengen von jeweils mindestens vier zielortabhängigen Navigationssignalen abgestrahlt werden (Diversity). Die "Funklöcher" haben die Ausmaße von ca. einer Wellenlänge und verteilen sich in einem Interferenzmuster, welches stark von der Sendeantennenposition abhängt. Die Erzeugung von Diversity kann mit gewissen Abstrichen auch durch Umschalten des auszusendenden verändernden Summennavigationssignals $6_1$, $6_2$, ..., $6_n$ auf mehrere örtlich voneinander getrennte Antennen des zumindest einen lokalen Positionssenders $3_1$, $3_2$, ..., $3_n$ im Zeit-Multiplex-Verfahren erzeugt werden. Dabei sendet bevorzugt jede der mehreren Antennen des lokalen Positionssenders $3_1$, $3_2$, ..., $3_n$ im Wechsel das veränderte Summennavigationssignal $6_1$, $6_2$, ..., $6_n$ für eine gewisse Zeit, beispielsweise für mehr als 100 Millisekunden, oder für mehr als 200 Millisekunden, oder für mehr als 300 Millisekunden aber für weniger als 10 Sekunden aus, während die anderen Antennen des zumindest einen lokalen Positionssenders $3_1$, $3_2$, ..., $3_n$ nichts aussenden.

Figur 2 zeigt ein weiteres Übersichtsschaltbild über die erfindungsgemäße Vorrichtung 1 zum Erzeugen und Bereitstellen von individuellen Positionsinformationen zur Ortsbestimmung. Dargestellt ist die Aufbereitungseinheit 2, die mit mehreren lokalen Positionssendern $3_1$, $3_2$, ..., $3_n$ verbunden ist. In dem Ausführungsbeispiel aus Figur 2 sind die lokalen Positionssender $3_1$, $3_2$, ..., $3_n$ innerhalb eines Gebäudes angebracht. Bevorzugt ist in jedem Raum ein solcher lokaler Positionssender $3_1$, $3_2$, ..., $3_n$ angebracht. Bei größeren Räumen können auch mehrere lokale Positionssender $3_1$, $3_2$, ..., $3_n$ innerhalb des Raumes angebracht werden, wobei diese voneinander einen Abstand haben. Um Probleme durch Fading zu vermeiden, werden durch die Auswahleinheit 7 für die Erzeugung des veränderten Summennavigationssignals $6_1$, $6_2$, ..., $6_n$ für den ersten lokalen Positionssender $3_1$, $3_2$, ..., $3_n$ und jeden weiteren lokalen Positionssender $3_1$, $3_2$, ..., $3_n$ vollständig oder zumindest teilweise unterschiedliche Satelliten S1, S2, S3, S4 ausgewählt.

Die Aufbereitungseinheit 2 ist in dem Ausführungsbeispiel aus Figur 2 ebenfalls mit einer Empfangseinheit 9 verbunden. Bei der Empfangseinheit 9 handelt es sich allerdings um zumindest einen Signalgenerator 20. Mittels dieses Signalgenerators 20 ist es möglich, zumindest vier künstliche Satellitensignale $4_1$, $4_2$, $4_3$, $4_4$ zu generieren, die den realen Satellitensignalen $4_1$, $4_2$, $4_3$, $4_4$ der zumindest vier ausgewählten Satelliten S1, S2, S3, S4 nachgebildet sind, die sich im Orbit über dem Ort des zumindest einen lokalen Positionssenders $3_1$, $3_2$, ..., $3_n$ befinden. Die Auswahleinheit 7 überträgt hierfür die notwendigen Daten über die ausgewählten Satelliten S1, S2, S3, S4 an den Signalgenerator 20. Dazu gehören beispielsweise die Ephemeriden und der Satellitenname sowie ggf. eine genaue Uhrzeit. Dadurch kann der zumindest eine Signalgenerator 20 zumindest vier Navigationssignale $4_1$, $4_2$, $4_3$, $4_4$ künstlich generieren, wobei jedes Navigationssignal $4_1$, $4_2$, $4_3$, $4_4$ im Idealfall nicht mehr von den Navigationssignalen $4_1$, $4_2$, $4_3$, $4_4$ zu unterscheiden

ist, welche von den tatsächlichen Satelliten S1, S2, S3, S4 ausgesendet werden.

Anhand der zumindest vier generierten Navigationssignale $4_1$, $4_2$, $4_3$, $4_4$, die der Aufbereitungseinheit 2 zugeführt werden, ermittelt die Aufbereitungseinheit 2 einen Standort, den ein Empfangsgerät errechnen würde, der all diese vier Navigationssignale $4_1$, $4_2$, $4_3$, $4_4$ empfangen würde. Ausgehend von diesem berechneten Standort, der natürlich durch den Signalgenerator 20 beeinflusst werden kann, verschiebt die Aufbereitungseinheit 2 zwei, drei oder alle der zumindest vier einzelnen Navigationssignale $4_1$, $4_2$, $4_3$, $4_4$ zeitlich derart, dass zumindest vier zielortabhängige Navigationssignale entstehen, wobei eine Überlagerung der zielortabhängigen vier Navigationssignale zu einem veränderten Summennavigationssignal $6_1$, $6_2$, ..., $6_n$ den Standort des zumindest einen lokalen Positionssenders $3_1$, $3_2$, ..., $3_n$ ergibt, oder einen Zielort, der in Funkreichweite des zumindest einen lokalen Positionssenders $3_1$, $3_2$, ..., $3_n$ liegt oder gar beliebig gewählt ist. Dem entsprechenden lokalen Positionssender $3_1$, $3_2$, ..., $3_n$ wird das veränderte Summennavigationssignal $6_1$, $6_2$, ..., $6_n$ dann zugeführt.

Die Aufbereitungseinheit 2 digitalisiert bevorzugt die ihr zugeführten zumindest vier Navigationssignale $4_1$, $4_2$, $4_3$, $4_4$. Die Verzögerung, also die zeitliche Verschiebung der zumindest vier Navigationssignale $4_1$, $4_2$, $4_3$, $4_4$ erfolgt dann digital. Dies gilt auch für die Überlagerung. Es ist allerdings auch möglich, dass die Verzögerung analog erfolgt, indem die einzelnen Navigationssignale $4_1$, $4_2$, $4_3$, $4_4$ mittels zu- und wegschaltbaren Verzögerungsleitungen gegeneinander verzögert werden.

Bei den veränderten Summennavigationssignalen $6_1$, $6_2$, ..., $6_n$ handelt es sich um ein digitales Signal oder um ein analoges Signal. Im ersten Fall verfügen die lokalen Positionssender $3_1$, $3_2$, ..., $3_n$ über einen Digital-Analog-Wandler und bevorzugt über einen Verstärker und/oder Dämpfungselement. Ansonsten kann optional nur ein Verstärker und/oder Dämpfungselement eingesetzt werden.

Der zumindest eine Signalgenerator 20 ist dazu ausgebildet, bevorzugt die zumindest vier Navigationssignale $4_1$, $4_2$, $4_3$, $4_4$ parallel zu erzeugen. Es wäre allerdings auch möglich, dass der zumindest eine Signalgenerator 20 die zumindest vier Navigationssignale $4_1$, $4_2$, $4_3$, $4_4$ sequentiell erzeugt, wobei die Aufbereitungseinheit 2 bei der Verschiebung der Sendezeitpunkte innerhalb der Navigationssignale $4_1$, $4_2$, $4_3$, $4_4$ die Zeitdifferenz bei der Erzeugung mitberücksichtigt.

Es ist auch möglich, dass der Signalgenerator 20 einzig ein Summennavigationssignal ausgibt, welches eine Überlagerung der zumindest vier Navigationssignale $4_1$, $4_2$, $4_3$, $4_4$ darstellt. In diesem Fall muss die Aufbereitungseinheit 2 das ihr zugeführte Summennavigationssignal entsprechend de-multiplexen, um daraus die einzelnen zumindest vier Navigationssignale $4_1$, $4_2$, $4_3$, $4_4$ zu erhalten.

Bei Verwendung von mehreren lokalen Positionssendern $3_1$, $3_2$, ..., $3_n$, insbesondere innerhalb eines Raumes, zeigt sich, dass sich deren abgestrahlte, veränderte Summennavigationssignale $6_1$, $6_2$, ..., $6_n$ innerhalb des Raumes überlagern. Daher werden in einem solchen Fall bei der Erzeugung des veränderten Summennavigationssignals $6_1$, $6_2$, ..., $6_n$ bevorzugt vollständig oder zumindest teilweise unterschiedliche Satelliten S1, S2, S3, S4 zugrunde gelegt, also ausgewählt. Dies bedeutet, dass bei Verwendung von zumindest zwei lokalen Positionssendern $3_1$, $3_2$, ..., $3_n$ für die Erzeugung des veränderten Summennavigationssignals $6_1$, $6_2$, ..., $6_n$ des ersten lokalen Positionssenders $3_1$, $3_2$, ..., $3_n$ Satelliten S1, S2, S3, S4 ausgewählt werden, die für die Erzeugung des veränderten Summennavigationssignals $6_1$, $6_2$, ..., $6_n$ des zweiten oder der weiteren lokalen Positionssender $3_1$, $3_2$, ..., $3_n$ nicht oder nur teilweise ausgewählt werden.

Die Auswahleinheit 7 aus Figur 2 ist ebenfalls mit einer nicht dargestellten Speichereinheit 10 verbunden. Über die Speichereinheit 10 ruft die Auswahleinheit 7 alle Satelliten S1, S2, S3, S4 ab, die sich im Orbit über dem Ort des zumindest einen lokalen Positionssenders $3_1$, $3_2$, ..., $3_n$ befinden. Anhand der sichtbaren Satelliten S1, S2, S3, S4 wählt die Auswahleinheit 7 zumindest vier von diesen aus. Dabei spielen Kriterien wie eine gleichmäßige Verteilung der Satelliten S1, S2, S3, S4 im Orbit über dem Ort der lokalen Positionssender $3_1$, $3_2$, ..., $3_n$ eine Rolle, so dass eine möglichst genaue Ortsbestimmung, insbesondere eine möglichst gute Höheninformation aus den empfangenen veränderten Summennavigationssignalen $6_1$, $6_2$, ..., $6_n$ der lokalen Positionssender $3_1$, $3_2$, ..., $3_n$ berechenbar ist.

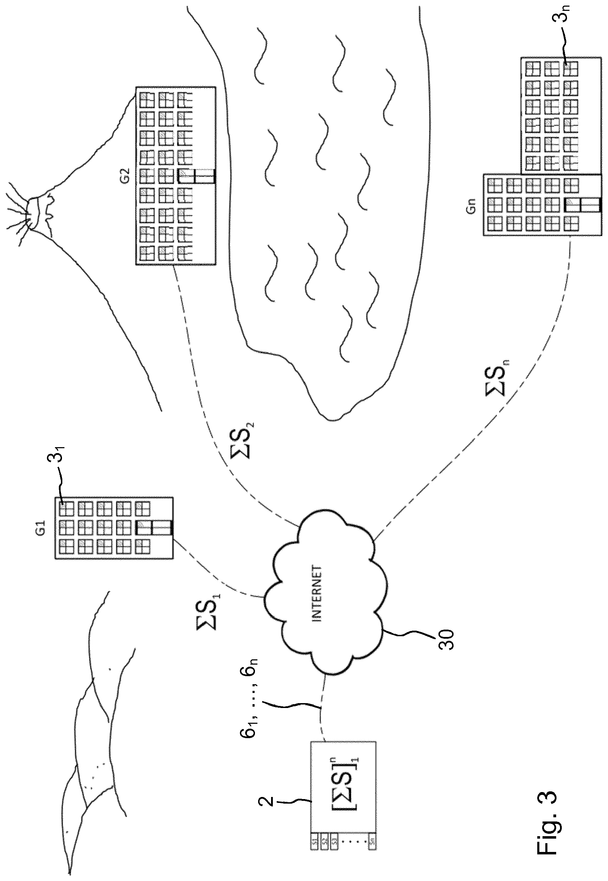

Figur 3 zeigt ein weiteres Ausführungsbeispiel der Erfindung, in dem nochmals betont wird, dass eine einzige Aufbereitungseinheit 2 eine Vielzahl von unterschiedlichen lokalen Positionssendern $3_1$, $3_2$, ..., $3_n$ mit individuellen veränderten Summennavigationssignalen $6_1$, $6_2$, ..., $6_n$ versorgen kann. Das Erzeugen der veränderten Summennavigationssignale $6_1$, $6_2$, ..., $6_n$ durch die Aufbereitungseinheit 2 und das Abstrahlen der veränderten Summennavigationssignale $6_1$, $6_2$, ..., $6_n$ durch die lokalen Positionssender $3_1$, $3_2$, ..., $3_n$ erfolgt an räumlich getrennten Orten. Die einzelnen lokalen Positionssender $3_1$, $3_2$, ..., $3_n$ müssen sich dabei nicht einmal im gleichen Haus befinden. Die Bereiche, die die einzelnen lokalen Positionssender $3_1$, $3_2$, ..., $3_n$ abdecken, können wenige Meter oder gar (hunderte bzw. tausende) Kilometer entfernt voneinander liegen. Die Übertragung der veränderten Summennavigationssignalen $6_1$, $6_2$, ..., $6_n$ zu den jeweiligen lokalen Positionssender $3_1$, $3_2$, ..., $3_n$ erfolgt beispielsweise über ein paketorientiertes Verfahren, wie beispielsweise TCP/IP oder UDP unter Nutzung des Internets oder des Intranets (z.B. mittels dark fibres). Dabei können über dieselben Leitungssegmente mehrere lokale Positionssender $3_1$, $3_2$, ..., $3_n$ mit den jeweiligen veränderten Summennavigationssignalen $6_1$, $6_2$, ..., $6_n$ versorgt werden. Im einfachsten Fall werden die lokalen Positionssender $3_1$, $3_2$, ..., $3_n$, z.B. innerhalb eines Gebäudes, über ein bereits existierendes Kommunikationsnetz angesteuert. Vorzugsweise werden sie über dieses Kommunikationsnetz auch mit Energie zum Betrieb versorgt. Hierfür eignet sich beispielsweise der Power-over-Lan-Standard. Es können allerdings auch andere, ggf. proprietäre Schnittstellen verwendet werden.

Ein weiterer Vorteil bei Vorrichtung zum Erzeugen und Bereitstellen von Positionsinformationen besteht darin, dass die Vorrichtung 1 beliebig um weitere lokale Positionssender $3_1$, $3_2$, ..., $3_n$ erweiterbar ist. Dafür ist lediglich eine Anpassung der Softwareeinstellung erforderlich.

Einem Benutzer steht es auch frei seinen lokalen Positionssender $3_1$, $3_2$, ..., $3_n$, bei welchem es sich z.B. um einen Heimrouter handeln kann, bei einer Aufbereitungseinheit 2 unter Übermittlung seines genauen Standorts anzumelden bzw. zu registrieren. Die Aufbereitungseinheit 2 übermittelt dann fortlaufend an diesen die aktuellen veränderten Summennavigationssignale $6_1$, $6_2$, ..., $6_n$ für dessen Standort.

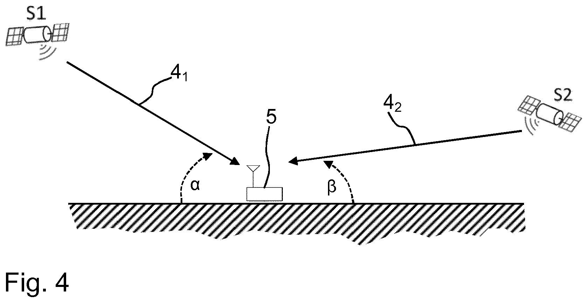

Figur 4 zeigt eine vereinfachte Darstellung, die erläutert, welche Satelliten S1, S2, S3, S4 im Orbit über dem Ort der lokalen Positionssender $3_1$, $3_2$, ..., $3_n$ durch die Auswahleinheit 7 ausgewählt werden. Dargestellt ist ein GNSS-Empfänger 5 und zwei beispielhafte Satelliten S1 und S2. Das Navigationssignal $4_1$, welches von dem ersten Satelliten S1 in Richtung des GNSS-Empfängers 5 gesendet wird, trifft unter einem Winkel $\alpha$ zum Boden hin am GNSS-Empfänger 5 auf. Ein zweiter Satellit S2 sendet ein zweites Navigationssignal $4_2$ in Richtung des GNSS-Empfängers 5 aus. Dieses zweite Navigationssignal $4_2$ trifft unter einem Winkel $\beta$ zum Boden hin an dem GNSS-Empfänger 5 auf. Die Auswahleinheit 7 berücksichtigt bei ihrer Auswahl einzig Satelliten S1, S2, S3, S4, die ein Navigationssignal $4_1$, $4_2$, $4_3$, $4_4$ aussenden, welches unter einem Winkel von mehr als 5°, bevorzugt von mehr als 10° und weiter bevorzugt von mehr als 20° am Ort des lokalen Positionssenders $3_1$, $3_2$, ..., $3_n$, was auch der Ort des GNSS-Empfängers 5 sein kann, zum Boden hin auftrifft. Satellitensignale, also Navigationssignale $4_1$, $4_2$, $4_3$, $4_4$, die in einem kleineren Winkel auftreffen, werden durch die Auswahleinheit 7 verworfen. Dies ist darin begründet, dass manche Empfangsgeräte solche Navigationssignale $4_1$, $4_2$, $4_3$, $4_4$ nicht zur Positionsbestimmung heranziehen würden, weil dies als Indiz für Fading gelten kann.

In dem Ausführungsbeispiel gemäß Figur 4 würde die Auswahleinheit 7 das von dem Satelliten S2 empfangene zweite Navigationssignal $4_2$ nicht berücksichtigen. Der Satellit S2 würde durch die Auswahleinheit 7 nicht ausgewählt werden. Die Auswahleinheit 7 würde einzig den Satelliten S1 und weitere nicht dargestellte Satelliten auswählen, deren Satellitensignale, also deren Navigationssignale $4_1$, $4_3$, $4_4$ unter einem größeren Winkel zum Boden hin am GNSS-Empfänger 5 auftreffen.

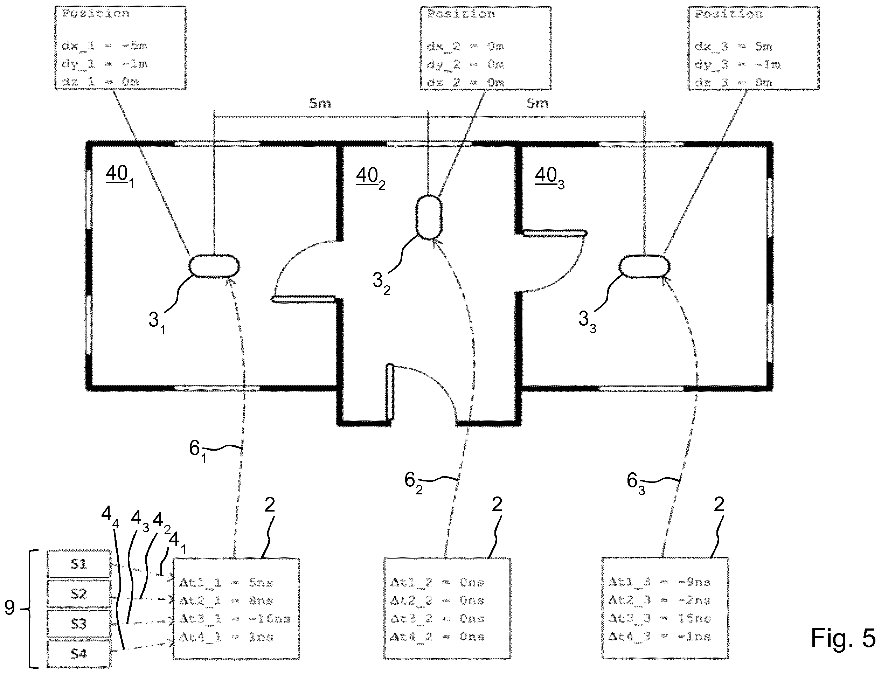

Figur 5 zeigt eine vereinfachte Darstellung, die verdeutlicht, wie ein verändertes Summennavigationssignal $6_1$, $6_2$, ..., $6_n$ erzeugt und an verschiedene lokale Positionssender $3_1$, $3_2$, ..., $3_n$ innerhalb verschiedener Räume $40_1$, $40_2$, $40_3$ übermittelt wird.

In dem Ausführungsbeispiel aus Figur 5 sind die Grundrisse von drei Räumen $40_1$, $40_2$, $40_3$ dargestellt. Innerhalb jedes Raumes $40_1$, $40_2$, $40_3$ ist ein lokaler Positionssender $3_1$, $3_2$, $3_3$ untergebracht. Für jeden lokalen Positionssender $3_1$, $3_2$, $3_3$ ist seine Position in Bezug auf einen Referenzpunkt genau bekannt. Bei dem Referenzpunkt handelt es sich beispielsweise um die Position eines GNSS-Empfängers 5 oder um die Position eines lokalen Positionssenders $3_1$, $3_2$, $3_3$. In dem Ausführungsbeispiel aus Figur 5 wurde als Referenzpunkt die Position des zweiten lokalen Positionssenders $3_2$ gewählt. Navigationssignale $4_1$, $4_2$, $4_3$, $4_4$, die der Aufbereitungseinheit 2 zugeführt werden, und bei denen die daraus erzielbaren Positionsinformationen, also Zielortkoordinaten auf Basis des globalen Navigationssatellitensystems bereits dem Ort des zweiten lokalen Positionssenders $3_2$ oder einer Position im Raum, also in Funkreichweite des zweiten lokalen Positionssenders $3_2$ entsprechen, müssen für diesen nicht verzögert werden. Die Aufbereitungseinheit 2 muss diese Navigationssignale $4_1$, $4_2$, $4_3$, $4_4$ allerdings für den ersten lokalen Positionssender $3_1$ und den dritten lokalen Positionssender $3_3$ verzögern, also zeitlich verschieben. In diesem Beispiel muss das erste Navigationssignal $4_1$ um +5ns, das zweite Navigationssignal $4_2$ um +8ns, das dritte Navigationssignal $4_3$ um -16ns und das vierte Navigationssignal $4_4$ um +1ns verschoben werden. Andere Ausführungsformen sind selbstverständlich möglich. Das durch die Aufbereitungseinheit 2 aus diesen veränderten Navigationssignalen generierte veränderte Summennavigationssignal $6_1$ wird dem ersten lokalen Positionssender $3_1$ zugeführt. Empfänger, die innerhalb des ersten Raums $40_1$ angeordnet sind, können die Position des ersten lokalen Positionssenders $3_1$ empfangen. Die zeitliche Verschiebung kann natürlich auch derart erfolgen, dass ein Zielort ausgesucht wird, der in Funkreichweite des ersten lokalen Positionssenders $3_1$ liegt.

Gleiches gilt auch für den dritten lokalen Positionssender $3_3$. Die Aufbereitungseinheit 2 verzögert die empfangenen Navigationssignale $4_1$, $4_2$, $4_3$, $4_4$ entsprechend.

In dem Ausführungsbeispiel aus Figur 5 wird wiederum der zumindest eine Signalgenerator 20 verwendet. Es wäre allerdings auch möglich, dass der Aufbereitungseinheit 2 Navigationssignale $4_1$, $4_2$, $4_3$, $4_4$ übermittelt werden würden, die von realen Satelliten S1, S2, S3, S4 empfangen werden.

Der zumindest eine lokale Positionssender $3_1$, $3_2$, ..., $3_n$ kann auch Teil einer Sende- / Empfangseinheit sein, die wiederum Teil einer Mobilfunkstation, also einer Mobilfunkbasisstation ist. Bei einer solchen Mobilfunkstation kann es sich auch um eine sogenannte "Indoor coverage"-Einheit handeln. Die Aufbereitungseinheit 2 führt dazu das veränderte Summennavigationssignal $6_1$, $6_2$, ..., $6_n$ über die gleiche Verbindung zu, über die auch die Sende- / Empfangseinheit der Mobilfunkstation bzw. der Mobilfunkbasisstation ihre Daten erhält. Vorteilhafterweise kann daher eine bereits bestehende Infrastruktur mitverwendet werden. Bevorzugt wird ein vermittlungsorientiertes Protokoll verwendet. Ein paketorientiertes Protokoll zur Ansteuerung der lokalen Positionssender $3_1$, $3_2$, ..., $3_n$ wäre allerdings auch denkbar.

Es ist weiterhin eine Integration eines GNSS-Empfängers im oder am lokalen Positionssender $3_1$, $3_2$, $3_3$, ...,

$3_n$ möglich, der das geänderte Summennavigationssignal $6_1$, $6_2$, $6_3$, ..., $6_n$ empfängt, seine Position ermittelt und diese zur Verfügung stellt. Diese Position, welche durch den GNSS-Empfänger ermittelt wird, kann mit dem Zielort verglichen werden. Somit besteht eine Kontroll- und Regelmöglichkeit im Gesamtsystem.

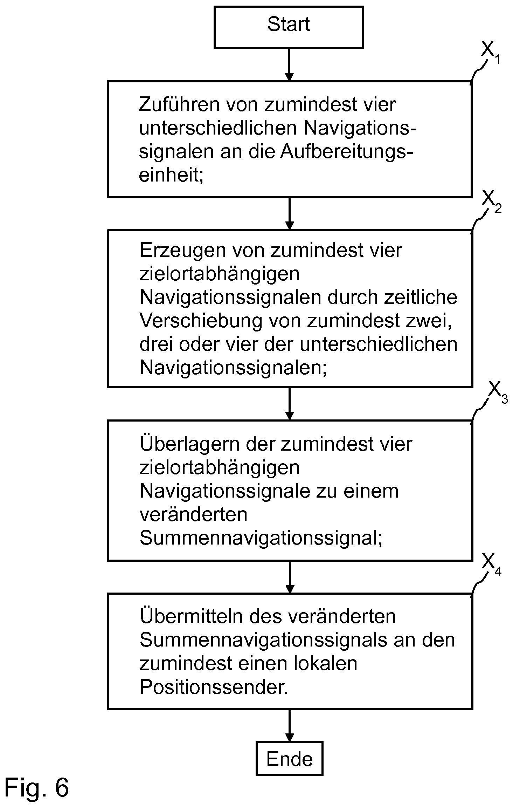

Figur 6 zeigt ein Flussdiagramm, welches erläutert, wie das veränderte Summennavigationssignal $6_1$, $6_2$, ..., $6_n$ erzeugt wird. In einem ersten Verfahrensschritt $X_1$ werden zumindest vier unterschiedliche Navigationssignale $4_1$, $4_2$, $4_3$, $4_4$ an die Aufbereitungseinheit 2 zugeführt, von denen jedes einem Satellitensignal auf Basis des globalen Navigationssatellitensystems entspricht.

In einem zweiten Verfahrensschritt $X_2$ werden durch die Aufbereitungseinheit 2 zielortsabhängige Navigationssignale erzeugt. Dies gelingt, indem zumindest zwei, drei oder alle vier unterschiedlichen Navigationssignale $4_1$, $4_2$, $4_3$, $4_4$ zeitlich derart verschoben werden, so dass die daraus erzielbaren Positionsinformationen auf Basis des globalen Navigationssatellitensystems dem Zielort entsprechen.

In einem dritten Verfahrensschritt $X_3$ werden die zumindest vier zielortabhängigen Navigationssignale zu einem veränderten Summennavigationssignal $6_1$, $6_2$, $6_3$, ..., $6_n$ überlagert.

Schließlich wird in einem vierten Verfahrensschritt $X_4$ das veränderte Summennavigationssignal $6_1$, $6_2$, $6_3$, ..., $6_n$ an den zumindest einen lokalen Positionssender $3_1$, $3_2$, $3_3$, ..., $3_n$ übermittelt, der dieses dann aussendet.

Bei dem Navigationssignal $4_1$, $4_2$, $4_3$, $4_4$ handelt es sich um ein Signal, das einem Satellitensignal auf Basis des globalen Navigationssatellitensystems entspricht und den jeweiligen Standard erfüllt.

Bei dem zielortabhängigen Navigationssignal handelt es sich um das Navigationssignal $4_1$, $4_2$, $4_3$, $4_4$, das zeitlich gegenüber dem Navigationssignal $4_1$, $4_2$, $4_3$, $4_4$ verschoben ist.

Das veränderte Summennavigationssignal $6_1$, $6_2$, $6_3$, ..., $6_n$ ist eine Überlagerung der zielortabhängigen Navigationssignale.

Das veränderte Summennavigationssignals ($6_1$, $6_2$, $6_3$, ..., $6_n$) kann bezüglich seines Signalpegels aufbereitet werden, so dass dieses gut von den Empfängern in Gebäuden, Tunneln, usw. empfangen und ausgewertet werden kann. Der Signalpegel ist vorzugsweise derart hoch eingestellt, dass Empfänger außerhalb des Gebäudes dieses im Idealfall nicht empfangen.

**Patentansprüche**

1. Verfahren zum Erzeugen und Bereitstellen von individuellen Positionsinformationen zur Ortsbestimmung auf Basis des globalen Navigationssatellitensystems, mit den folgenden Merkmalen:

   - Verwendung einer Aufbereitungseinheit (2) und zumindest zwei oder zumindest drei oder zumindest vier oder zumindest fünf lokalen Positionssendern ($3_1$, $3_2$, $3_3$, ..., $3_n$), wobei die lokalen Positionssender ($3_1$, $3_2$, $3_3$, ..., $3_n$) mit der Aufbereitungseinheit (2) verbunden sind;
   - Zuführen ($X_1$) von zumindest vier unterschiedlichen Navigationssignalen ($4_1$, $4_2$, $4_3$, $4_4$) an die Aufbereitungseinheit (2), von denen jedes einem Satellitensignal auf Basis des globalen Navigationssatellitensystems entspricht;
   - Erzeugen ($X_2$) von zumindest vier zielortabhängigen Navigationssignalen durch zeitliche Verschiebung zumindest zweier, dreier oder aller vier der zumindest vier unterschiedlichen Navigationssignale ($4_1$, $4_2$, $4_3$, $4_4$) durch die Aufbereitungseinheit (2), so dass die daraus erzielbaren Positionsinformationen auf Basis des globalen Navigationssatellitensystems einem gewählten Zielort entsprechen;

   **gekennzeichnet durch** die folgenden Merkmale:

   - Überlagern ($X_3$) der zumindest vier zielortabhängigen Navigationssignalen zu einem veränderten Summennavigationssignal ($6_1$, $6_2$, $6_3$, ..., $6_n$) ;
   - Übermitteln ($X_4$) des veränderten Summennavigationssignals ($6_1$, $6_2$, $6_3$, ..., $6_n$) an einen der zumindest zwei lokalen Positionssender ($3_1$, $3_2$, $3_3$, ..., $3_n$) ;
   - die Schritte Erzeugen ($X_2$), Überlagern ($X_3$) und Übermitteln ($X_4$) werden für jeden der lokalen Positionssender ($3_1$, $3_2$, $3_3$, ..., $3_n$) einzeln durchgeführt, wobei die zeitliche Verschiebung in dem Verfahrensschritt Erzeugen ($X_2$) auf den jeweiligen gewählten Zielort individuell angepasst wird;
   - Aussenden des jeweiligen veränderten Summennavigationssignals ($6_1$, $6_2$, $6_3$, ..., $6_n$) durch die lokalen Positionssender ($3_1$, $3_2$, $3_3$, ..., $3_n$).

2. Verfahren nach Anspruch 1, **dadurch gekennzeichnet, dass** die lokalen Positionssender ($3_1$, $3_2$, $3_3$, ..., $3_n$) und die Aufbereitungseinheit (2) in voneinander getrennten Gehäusen untergebracht sind, wobei das veränderte Summennavigationssignal ($6_1$, $6_2$, $6_3$, ..., $6_n$) ein digitales Summennavigationssignal ($6_1$, $6_2$, $6_3$, ..., $6_n$) ist und wobei die Generierung des digitalen Summennavigationssignals ($6_1$, $6_2$, $6_3$, ..., $6_n$) ausschließlich in der Aufbereitungseinheit (2) zentral für alle mit der Aufbereitungseinheit (2) verbundenen lokalen Positionssender ($3_1$, $3_2$, $3_3$, ..., $3_n$) erfolgt und das jeweilige Summennavigationssignals ($6_1$, $6_2$, $6_3$, ..., $6_n$) digital an den jeweiligen lokalen Positionssender ($3_1$, $3_2$, $3_3$, ..., $3_n$) übertragen wird.

3. Verfahren nach Anspruch 1 oder 2, **dadurch gekennzeichnet, dass** es sich bei dem Zielort um einen Ort handelt, der in Funkreichweite von dem jeweiligen lokalen Positionssender ($3_1$, $3_2$, $3_3$, ..., $3_n$) liegt.

4. Verfahren nach einem der vorherigen Ansprüche, **gekennzeichnet durch:**

- Auswählen von zumindest vier Satelliten (S1, S2, S3, S4), die sich im Orbit über dem Ort des zumindest einen lokalen Positionssenders ($3_1$, $3_2$, $3_3$, ..., $3_n$) befinden; und

a) Empfangen von zumindest vier realen Satellitensignalen ($4_1$, $4_2$, $4_3$, $4_4$) der zumindest vier ausgewählten Satelliten (S1, S2, S3, S4) und/oder
Generieren von zumindest vier künstlichen Satellitensignalen, die den realen Satellitensignalen der zumindest vier ausgewählten Satelliten (S1, S2, S3, S4) nachgebildet sind,
wobei es sich bei den zumindest vier empfangenen realen und/oder bei den zumindest vier empfangenen generierten Satellitensignalen um die Navigationssignale ($4_1$, $4_2$, $4_3$, $4_4$) handelt, die der Aufbereitungseinheit (2) im Verfahrensschritt Zuführen ($X_1$) zugeführt werden, oder
b) Kombiniertes Empfangen von realen Satellitensignalen ($4_1$, $4_2$, $4_3$, $4_4$) von einem oder mehreren der zumindest vier ausgewählten Satelliten (S1, S2, S3, S4) und Generieren von künstlichen Satellitensignalen, die den realen Satellitensignalen von einem oder mehreren der zumindest vier ausgewählten Satelliten (S1, S2, S3, S4) nachgebildet sind, wobei es sich bei den empfangenen realen und/oder bei den empfangenen generierten Satellitensignalen um die Navigationssignale ($4_1$, $4_2$, $4_3$, $4_4$) handelt, die der Aufbereitungseinheit (2) im Verfahrensschritt Zuführen ($X_1$) zugeführt werden und wobei insgesamt mindestens vier Navigationssignale ($4_1$, $4_2$, $4_3$, $4_4$) vorliegen müssen.

5. Verfahren nach Anspruch 4, **dadurch gekennzeichnet, dass** in dem Verfahrensschritt Auswählen die Satelliten (S1, S2, S3, S4) ausgewählt werden, die am weitesten voneinander entfernt sind und/oder die ein Navigationssignal ($4_1$, $4_2$, $4_3$, $4_4$) aussenden, das in einem Winkel von bevorzugt mehr als 5°, weiter bevorzugt von mehr als 10°, weiter bevorzugt von mehr als 20° am Ort des lokalen Positionssenders ($3_1$, $3_2$, $3_3$, ..., $3_n$) zum Boden hin auftrifft und/oder die bevorzugt gleichmäßig zueinander angeordnet sind.

6. Verfahren nach Anspruch 4 oder 5, **dadurch gekennzeichnet, dass** beim Verfahrensschritt Auswählen für den ersten lokalen Positionssender ($3_1$, $3_2$, $3_3$, ..., $3_n$) und jeden weiteren lokalen Positionssender ($3_1$, $3_2$, $3_3$, ..., $3_n$) vollständig oder zumindest teilweise unterschiedliche Satelliten (S1, S2, S3, S4) ausgewählt werden.

7. Verfahren nach einem der vorherigen Ansprüche, **gekennzeichnet durch** die folgenden Merkmale:

- zumindest einer der lokalen Positionssender ($3_1$, $3_2$, $3_3$, ..., $3_n$) ist Teil einer Sende- / Empfangseinheit, die Teil einer Mobilfunkstation ist und/oder, bei der Verbindung zwischen der Aufbereitungseinheit (2) und zumindest einem der lokalen Positionssender ($3_1$, $3_2$, $3_3$, ..., $3_n$) handelt es sich um eine Verbindung, mit der auch eine Sende- / Empfangseinheit einer Mobilfunkstation mit Daten versorgt wird; und/oder
- die lokalen Positionssender ($3_1$, $3_2$, $3_3$, ..., $3_n$) sind zumindest teilweise über eine gemeinsam genutzte Datenverbindung, insbesondere Ethernet, mit der Aufbereitungseinheit (2) verbunden.

8. Vorrichtung (1) zum Erzeugen und Bereitstellen von individuellen Positionsinformationen zur Ortsbestimmung auf Basis des globalen Navigationssatellitensystems, mit den folgenden Merkmalen:

- einer Aufbereitungseinheit (2) und zumindest zwei oder zumindest drei oder zumindest vier oder zumindest fünf lokalen Positionssendern ($3_1$, $3_2$, $3_3$, ..., $3_n$), wobei die lokalen Positionssender ($3_1$, $3_2$, $3_3$, ..., $3_n$) mit der Aufbereitungseinheit (2) verbunden sind;
- die Aufbereitungseinheit (2) ist derart ausgebildet, dass ihr zumindest vier unterschiedliche Navigationssignale ($4_1$, $4_2$, $4_3$, $4_4$) zugeführt werden können, von denen jedes einem Satellitensignal auf Basis des globalen Navigationssatellitensystems entspricht;
- die Aufbereitungseinheit (2) ist dazu ausgebildet, um zumindest vier zielortsabhängige Navigationssignale durch zeitliche Verschiebung zumindest zweier, dreier oder aller vier der zumindest vier unterschiedlichen

Navigationssignale ($4_1$, $4_2$, $4_3$, $4_4$) zu erzeugen, so dass die daraus erzielbaren Positionsinformationen auf Basis des globalen Navigationssatellitensystems einem gewählten Zielort entsprechen;

**gekennzeichnet durch** die folgenden Merkmale:

- die Aufbereitungseinheit (2) ist dazu ausgebildet, dass sie die zumindest vier zielortsabhängigen Navigationssignale zu einem veränderten Summennavigationssignal ($6_1$, $6_2$, $6_3$, ..., $6_n$) überlagert;
- die Aufbereitungseinheit (2) ist derart ausgebildet dass sie das veränderte Summennavigationssignal ($6_1$, $6_2$, $6_3$, ..., $6_n$) an einen der zumindest zwei lokalen Positionssender ($3_1$, $3_2$, $3_3$, ..., $3_n$) übermittelt;
- die Aufbereitungseinheit (2) ist dazu ausgebildet, für jeden an sie angeschlossenen lokalen Positionssender ($3_1$, $3_2$, $3_3$, ..., $3_n$) ein individuell angepasstes verändertes Summennavigationssignal (61, 62, 63, ..., 6n) zu generieren;
- die lokalen Positionssender ($3_1$, $3_2$, $3_3$, ..., $3_n$) sind dazu ausgebildet, das an sie übertragene veränderte Summennavigationssignal ($6_1$, $6_2$, $6_3$, ..., $6_n$) auszusenden.

**9.** Vorrichtung nach Anspruch 8, **dadurch gekennzeichnet, dass** die lokalen Positionssender ($3_1$, $3_2$, $3_3$, ..., $3_n$) und die Aufbereitungseinheit (2) in voneinander getrennten Gehäusen untergebracht sind, wobei das veränderte Sum-mennavigationssignal ($6_1$, $6_2$, $6_3$, ..., $6_n$) ein digitales Summennavigationssignal ($6_1$, $6_2$, $6_3$, ..., $6_n$) ist und wobei die Generierung des digitalen Summennavigationssignals ($6_1$, $6_2$, $6_3$, ..., $6_n$) ausschließlich in der Aufbereitungseinheit (2) zentral für alle mit der Aufbereitungseinheit (2) verbundenen lokalen Positionssender ($3_1$, $3_2$, $3_3$, ..., $3_n$) erfolgt und wobei das jeweilige Summennavigationssignals ($6_1$, $6_2$, $6_3$, ..., $6_n$) digital an den jeweiligen lokalen Positions-sender ($3_1$, $3_2$, $3_3$, ..., $3_n$) übertragen wird.

**10.** Vorrichtung nach Anspruch 8 oder 9, **dadurch gekennzeichnet,**
**dass** der Zielort in Funkreichweite des zumindest einen lokalen Positionssenders ($3_1$, $3_2$, $3_3$, ..., $3_n$) liegt.

**11.** Vorrichtung nach einem der Ansprüche 8 bis 10, **gekennzeichnet durch** die folgenden Merkmale:

- einer Auswahleinheit (7) die dazu ausgebildet ist, zumindest vier Satelliten (S1, S2, S3, S4) auszuwählen, die sich im Orbit über dem Ort des zumindest einen lokalen Positionssenders ($3_1$, $3_2$, $3_3$, ..., $3_n$) befinden und/oder
- die Aufbereitungseinheit (2) ist dazu ausgebildet, dass sie zumindest vier reale Satellitensignale ($4_1$, $4_2$, $4_3$, $4_4$) von den zumindest vier ausgewählten Satelliten (S1, S2, S3, S4) empfangen kann oder
- die Aufbereitungseinheit (2) ist dazu ausgebildet, dass sie zumindest vier künstlich generierte Satellitensignale empfangen kann, die den realen Satellitensignalen von den zumindest vier ausgewählten Satelliten (S1, S2, S3, S4) nachgebildet sind oder
- die Aufbereitungseinheit (2) ist dazu ausgebildet um sowohl reale Satellitensignale ($4_1$, $4_2$, $4_3$, $4_4$) von einem oder mehreren der zumindest vier ausgewählten Satelliten (S1, S2, S3, S4), als auch künstlich generierte Satellitensignale, die den realen Satellitensignalen von einem oder mehreren der zumindest vier ausgewählten Satelliten (S1, S2, S3, S4) nachgebildet sind, zu empfangen; und/oder
- bei den empfangenen realen und/oder bei den empfangenen generierten Satellitensignalen handelt es sich um die Navigationssignale ($4_1$, $4_2$, $4_3$, $4_4$).

**12.** Vorrichtung nach Anspruch 11, **dadurch gekennzeichnet, dass** die Auswahleinheit (7) derart ausgebildet ist, um diejenigen Satelliten (S1, S2, S3, S4) auszuwählen, die am weitesten voneinander entfernt sind und/oder die ein Satellitensignal aussenden, das in einem Winkel von bevorzugt mehr als 5°, weiter bevorzugt von mehr als 10°, weiter bevorzugt von mehr als 20° am Ort des jeweiligen lokalen Positionssenders ($3_1$, $3_2$, $3_3$, ..., $3_n$) zum Boden hin auftrifft und/oder die bevorzugt gleichmäßig zueinander angeordnet sind.

**13.** Vorrichtung nach Anspruch 11 oder 12, **dadurch gekennzeichnet, dass** die Auswahleinheit (7) derart ausgebildet ist, dass sie für den ersten lokalen Positionssender ($3_1$, $3_2$, $3_3$, ..., $3_n$) und jeden weiteren lokalen Positionssender ($3_1$, $3_2$, $3_3$, ..., $3_n$) vollständig oder zumindest teilweise unterschiedliche Satelliten (S1, S2, S3, S4) auswählt.

**14.** Vorrichtung nach einem der Ansprüche 11 bis 13, **dadurch gekennzeichnet, dass** zumindest ein lokaler Positi-onssender ($3_1$, $3_2$, $3_3$, ..., $3_n$) über mehrere örtlich voneinander getrennte Antennen verfügt und

a) dass über jeweils eine Antenne jeweils ein verändertes Summennavigationssignal ($6_1$, $6_2$, $6_3$, ..., $6_n$) ausge-sendet wird, wobei die Auswahleinheit (7) derart ausgebildet ist, damit für die zumindest vier unterschiedlichen Navigationssignale ($4_1$, $4_2$, $4_3$, $4_4$) jedes veränderten Summennavigationssignals ($6_1$, $6_2$, $6_3$, ..., $6_n$) das über

jede Antenne ausgesendet wird vollständig oder zumindest teilweise unterschiedliche Satelliten (S1, S2, S3, S4) ausgewählt werden, oder

b) dass das veränderte Summennavigationssignal ($6_1$, $6_2$, $6_3$, ..., $6_n$) nacheinander über die mehreren örtlich voneinander getrennten Antennen ausgesendet wird.

**15.** Vorrichtung nach einem der Ansprüche 8 bis 14, **dadurch gekennzeichnet, dass** zumindest einer der lokalen Positionssender ($3_1$, $3_2$, $3_3$, ..., $3_n$) Teil einer Sende- / Empfangseinheit ist, die Teil einer Mobilfunkstation ist und/oder, dass es sich bei der Verbindung zwischen der Aufbereitungseinheit (2) und zumindest einem der lokalen Positionssender ($3_1$, $3_2$, $3_3$, ..., $3_n$) um eine Verbindung handelt, mit der auch eine Sende- / Empfangseinheit einer Mobilfunkstation mit Daten versorgt wird und/oder dass die lokalen Positionssender ($3_1$, $3_2$, $3_3$, ..., $3_n$) zumindest teilweise über eine gemeinsam genutzte Datenverbindung, insbesondere Ethernet, mit der Aufbereitungseinheit (2) verbunden sind.

## Claims

**1.** Method for generating and providing individual pieces of position information for location determination on the basis of the global navigation satellite system, having the following features:

- using a preparation unit (2) and at least two or at least three or at least four or at least five local position transmitters ($3_1$, $3_2$, $3_3$, ..., $3_n$), the local position transmitters ($3_1$, $3_2$, $3_3$, ..., $3_n$) being connected to the preparation unit (2);
- supplying ($X_1$) at least four different navigation signals ($4_1$, $4_2$, $4_3$, $4_4$) to the preparation unit (2), each of which corresponds to a satellite signal on the basis of the global navigation satellite system;
- generating ($X_2$) at least four target-location-dependent navigation signals by time-shifting at least two, three or all four of the at least four different navigation signals ($4_1$, $4_2$, $4_3$, $4_4$) by way of the preparation unit (2), in such a way that the position information obtainable therefrom on the basis of the global navigation satellite system corresponds to a selected target location;

**charachterized by** the following features:

- superposing ($X_3$) the at least four target-location-dependent navigation signals to form a modified summed navigation signal ($6_1$, $6_2$, $6_3$, ..., $6_n$);
- conveying ($X_4$) the modified summed navigation signal ($6_1$, $6_2$, $6_3$, ..., $6_n$) to one of the at least two local position transmitters ($3_1$, $3_2$, $3_3$, ..., $3_n$);
- the steps of generating ($X_2$), superposing ($X_3$) and conveying ($X_4$) are carried out individually for each of the local position transmitters ($3_1$, $3_2$, $3_3$, ..., $3_n$), the time shift in the method step of generating ($X_2$) being adapted individually to each selected target location;
- broadcasting the associated modified summed navigation signal ($6_1$, $6_2$, $6_3$, ..., $6_n$) by way of the local position transmitters ($3_1$, $3_2$, $3_3$, ..., $3_n$).

**2.** Method according to claim 1, **characterised in that** the local position transmitter ($3_1$, $3_2$, $3_3$, ..., $3_n$) and the preparation unit (2) are accommodated in mutually separated housings, wherein the modified summed navigation signal ($6_1$, $6_2$, $6_3$, ..., $6_n$) is a digital summed navigation signal ($6_1$, $6_2$, $6_3$, ..., $6_n$) and wherein the generation of the digital summed navigation signal ($6_1$, $6_2$, $6_3$, ..., $6_n$) taking place centrally, exclusively in the preparation unit (2), for all local position transmitters ($3_1$, $3_2$, $3_3$, ..., $3_n$) connected to the preparation unit (2), and the associated summed navigation signal ($6_1$, $6_2$, $6_3$, ..., $6_n$) being transmitted digitally to the associated local position transmitter ($3_1$, $3_2$, $3_3$, ..., $3_n$).

**3.** Method according to either claim 1 or claim 2, **characterised in that** the target location is a location in radio range of the associated local position transmitter ($3_1$, $3_2$, $3_3$, ..., $3_n$).

**4.** Method according to any of the preceding claims, **characterised by:**

- selecting at least four satellites (S1, S2, S3, S4) which are in orbit above the location of the at least one local position transmitter ($3_1$, $3_2$, $3_3$, ..., $3_n$); and

a) receiving at least four real satellite signals ($4_1$, $4_2$, $4_3$, $4_4$) of the at least four selected satellites (S1, S2, S3, S4), and/or

generating at least four artificial satellite signals modelled on the real satellite signals of the at least four selected satellites (S1, S2, S3, S4),

the at least four received real and/or at least four received generated satellite signals being the navigation signals ($4_1$, $4_2$, $4_3$, $4_4$) supplied to the preparation unit (2) in the method step of supplying ($X_1$); or

b) in a combined manner, receiving real satellite signals ($4_1$, $4_2$, $4_3$, $4_4$) from one or more of the at least four selected satellites (S1, S2, S3, S4) and generating artificial satellite signals modelled on the real satellite signals of one or more of the at least four selected satellites (S1, S2, S3, S4), the received real and/or received generated satellite signals being the navigation signals ($4_1$, $4_2$, $4_3$, $4_4$) supplied to the preparation unit (2) in the method step of supplying ($X_1$), and overall at least four navigation signals ($4_1$, $4_2$, $4_3$, $4_4$) having to be present.

5. Method according to claim 4, **characterised in that,** in the method step of selecting, the satellites (S1, S2, S3, S4) are selected which are furthest away from one another and/or which broadcast a navigation signal ($4_1$, $4_2$, $4_3$, $4_4$) which is incident on the ground at an angle of preferably more than 5°, more preferably more than 10°, more preferably more than 20° at the location of the local position transmitter ($3_1$, $3_2$, $3_3$, ..., $3_n$) and/or which are preferably arranged uniformly with respect to one another.

6. Method according to either claim 4 or claim 5, **characterised in that,** in the method step of selecting, satellites (S1, S2, S3, S4) which are different entirely or at least in part are selected for the first local position transmitter ($3_1$, $3_2$, $3_3$, ..., $3_n$) and for each further local position transmitter ($3_1$, $3_2$, $3_3$, ..., $3_n$).

7. Method according to any of the preceding claims, **characterised by** the following features:

   - at least one of the local position transmitters ($3_1$, $3_2$, $3_3$, ..., $3_n$) is part of a transceiver unit which is part of a mobile radio station, and/or the connection between the preparation unit (2) and at least one of the local position transmitters ($3_1$, $3_2$, $3_3$, ..., $3_n$) is a connection by means of which a transceiver unit of a mobile radio station is also supplied with data; and/or
   - the local position transmitters ($3_1$, $3_2$, $3_3$, ..., $3_n$) are at least in part connected to the preparation unit (2) via a jointly used data connection, in particular Ethernet.

8. Device (1) for generating and providing individual pieces of position information for location determination on the basis of the global navigation satellite system, having the following features:

   - a preparation unit (2) and at least two or at least three or at least four or at least five local position transmitters ($3_1$, $3_2$, $3_3$, ..., $3_n$), the local position transmitters ($3_1$, $3_2$, $3_3$, ..., $3_n$) being connected to the preparation unit (2);
   - the preparation unit (2) is formed in such a way that at least four different navigation signals ($4_1$, $4_2$, $4_3$, $4_4$) are supplied thereto, each of which corresponds to a satellite signal on the basis of the global navigation satellite system;
   - the preparation unit (2) is formed to generate at least four target-location-dependent navigation signals by time-shifting at least two, three or all four of the at least four different navigation signals ($4_1$, $4_2$, $4_3$, $4_4$) by way of the preparation unit (2), in such a way that the position information obtainable therefrom on the basis of the global navigation satellite systems corresponds to a selected target location;

   **charachterized by** the following features:

   - the preparation unit (2) is formed in such a way that it superposes the at least four target-location-dependent navigation signals to form a modified summed navigation signal ($6_1$, $6_2$, $6_3$, ..., $6_n$);
   - the preparation unit (2) is formed in such a way that it conveys the modified summed navigation signal ($6_1$, $6_2$, $6_3$, ..., $6_n$) to one of the at least two local position transmitters ($3_1$, $3_2$, $3_3$, ..., $3_n$);
   - the preparation unit (2) is formed to generate, for each local position transmitter ($3_1$, $3_2$, $3_3$, ..., $3_n$) connected thereto, an individually adapted modified summed navigation signal ($6_1$, $6_2$, $6_3$, ..., $6_n$);
   - the local position transmitters ($3_1$, $3_2$, $3_3$, ..., $3_n$) are formed to broadcast the modified summed navigation signal ($6_1$, $6_2$, $6_3$, ..., $6_n$) transmitted thereto;.

9. Device according to claim 8, **characterised in that** the local position transmitter ($3_1$, $3_2$, $3_3$, ..., $3_n$) and the preparation unit (2) are accommodated in mutually separated housings, wherein the modified summed navigation signal ($6_1$, $6_2$, $6_3$, ..., $6_n$) is a digital summed navigation signal ($6_1$, $6_2$, $6_3$, ..., $6_n$) and wherein the generation of the digital summed navigation signal ($6_1$, $6_2$, $6_3$, ..., $6_n$) taking place centrally, exclusively in the preparation unit (2), for all local

position transmitters ($3_1$, $3_2$, $3_3$, ..., $3_n$) connected to the preparation unit (2), and the associated summed navigation signal ($6_1$, $6_2$, $6_3$, ..., $6_n$) being transmitted digitally to the associated local position transmitter ($3_1$, $3_2$, $3_3$, ..., $3_n$).

10. Device according to either claim 8 or claim 9, **characterised in that** the target location is in radio range of the at least one local position transmitter ($3_1$, $3_2$, $3_3$, ..., $3_n$).

11. Device according to any of claims 8 to 10, **characterised by** the following features:

- a selection unit (7) which is formed to select at least four satellites (S1, S2, S3, S4) which are in orbit above the location of the at least one local position transmitter ($3_1$, $3_2$, $3_3$, ..., $3_n$); and/or
- the preparation unit (2) is formed in such a way that it can receive at least four real satellite signals ($4_1$, $4_2$, $4_3$, $4_4$) of the at least four selected satellites (S1, S2, S3, S4); or
- the preparation unit (2) is formed in such a way that it can generate at least four artificial satellite signals modelled on the real satellite signals of the at least four selected satellites (S1, S2, S3, S4); or
- the preparation unit (2) is formed so as to receive both real satellite signals ($4_1$, $4_2$, $4_3$, $4_4$) from one or more of the at least four selected satellites (S1, S2, S3, S4) and artificially generated satellite signals modelled on the real satellite signals of one or more of the at least four selected satellites (S1, S2, S3, S4); and/or
- the received real and/or received generated satellite signals are the navigation signals ($4_1$, $4_2$, $4_3$, $4_4$).

12. Device according to claim 11, **characterised in that** the selection unit (7) is formed so as to select the satellites (S1, S2, S3, S4) which are furthest away from one another and/or which broadcast a satellite signal which is incident on the ground at an angle of preferably more than 5°, more preferably more than 10°, more preferably more than 20° at the location of the local position transmitter ($3_1$, $3_2$, $3_3$, ..., $3_n$) and/or which are preferably arranged uniformly with respect to one another.

13. Device according to either claim 11 or claim 12, **characterised in that** the selection unit (7) is formed in such a way that it selects satellites (S1, S2, S3, S4) which are different entirely or at least in part for the first local position transmitter ($3_1$, $3_2$, $3_3$, ..., $3_n$) and for each further local position transmitter ($3_1$, $3_2$, $3_3$, ..., $3_n$).

14. Device according to any of claims 11 to 13, **characterised in that** at least one local position transmitter ($3_1$, $3_2$, $3_3$, ..., $3_n$) has a plurality of mutually spatially separated antennas, and

a) **in that** a modified summed navigation signal ($6_1$, $6_2$, $6_3$, ..., $6_n$) is broadcast via each antenna, the selection unit (7) being formed in such a way that satellites (S1, S2, S3, S4) which are different entirely or at least in part are selected for the at least four different navigation signals ($4_1$, $4_2$, $4_3$, $4_4$) of each modified summed navigation signal ($6_1$, $6_2$, $6_3$, ..., $6_n$); or
b) **in that** the modified summed navigation signal ($6_1$, $6_2$, $6_3$, ..., $6_n$) is broadcast via the plurality of mutually spatially separated antennas in succession.

15. Device according to any of claims 8 to 14, **characterised in that** at least one of the local position transmitters ($3_1$, $3_2$, $3_3$, ..., $3_n$) is part of a transceiver unit which is part of a mobile radio station; and/or **in that** the connection between the preparation unit (2) and at least one of the local position transmitters ($3_1$, $3_2$, $3_3$, ..., $3_n$) is a connection by means of which a transceiver unit of a mobile radio station is also supplied with data; and/or **in that** the local position transmitters ($3_1$, $3_2$, $3_3$, ..., $3_n$) are at least in part connected to the preparation unit (2) via a jointly used data connection, in particular Ethernet.

**Revendications**

1. Procédé permettant de produire et de fournir des informations de position individuelles à des fins de localisation reposant sur le système GNSS (géolocalisation et navigation par système de satellites), présentant les aspects suivants :

- utilisation d'une unité de préparation (2) et d'au moins deux ou au moins trois ou au moins quatre ou au moins cinq émetteurs de position locaux ($3_1$, $3_2$, $3_3$, ..., $3_n$), lesdits émetteurs de position locaux ($3_1$, $3_2$, $3_3$, ..., $3_n$) étant reliés à l'unité de préparation (2),
- envoi ($X_1$) d'au moins quatre signaux de navigation différents ($4_1$, $4_2$, $4_3$, $4_4$) à l'unité de préparation (2), chacun d'entre eux correspondant à un signal satellite reposant sur le système GNSS,
- production ($X_2$) d'au moins quatre signaux de navigation fonction de la destination, par décalage temporel d'au moins deux, trois ou des quatre des au moins quatre signaux de navigation différents ($4_1$, $4_2$, $4_3$, $4_4$) par l'unité de préparation (2), de manière que les informations de position reposant sur le système GNSS susceptibles d'en être obtenues correspondent à une destination choisie ;

**caractérisé par** les aspects suivants :

- superposition ($X_3$) des au moins quatre signaux de navigation fonction de la destination à un signal de navigation total modifié ($6_1$, $6_2$, $6_3$, ..., $6_n$),
- transmission ($X_4$) du signal de navigation total modifié ($6_1$, $6_2$, $6_3$, ..., $6_n$) à l'un des au moins deux émetteurs de position locaux ($3_1$, $3_2$, $3_3$, ..., $3_n$),
- les étapes de production ($X_2$), superposition ($X_3$) et transmission ($X_4$) sont réalisées séparément pour chacun des émetteurs de position locaux ($3_1$, $3_2$, $3_3$, ..., $3_n$), le décalage temporel étant adapté individuellement, dans l'étape de production ($X_2$), à la destination respective choisie ;
- émission du signal de navigation total modifié ($6_1$, $6_2$, $6_3$, ..., $6_n$) respectif par les émetteurs de position locaux ($3_1$, $3_2$, $3_3$, ..., $3_n$).

2. Procédé selon la revendication 1, **caractérisé en ce que** les émetteurs de position locaux ($3_1$, $3_2$, $3_3$, $3_n$) et l'unité de préparation (2) sont disposés dans des boîtiers séparés, le signal de navigation total modifié ($6_1$, $6_2$, $6_3$, ..., $6_n$) étant un signal de navigation total numérique ($6_1$, $6_2$, $6_3$, ..., $6_n$) et la génération du signal de navigation total numérique ($6_1$, $6_2$, $6_3$, ..., $6_n$) s'effectuant exclusivement dans l'unité de préparation (2) centralement pour tous les émetteurs de position locaux ($3_1$, $3_2$, $3_3$, ..., $3_n$) reliés à l'unité de préparation (2) et le signal de navigation total ($6_1$, $6_2$, $6_3$, ..., $6_n$) respectif étant transmis de manière numérique aux émetteurs de position locaux ($3_1$, $3_2$, $3_3$, ..., $3_n$) respectifs.

3. Procédé selon la revendication 1 ou 2, **caractérisé en ce que** la destination consiste en un lieu se trouvant à portée radio de l'émetteur de position local ($3_1$, $3_2$, $3_3$, ..., $3_n$) respectif.

4. Procédé selon l'une des revendications précédentes, **caractérisé par** :

- le choix d'au moins quatre satellites (S1, S2, S3, S4) se trouvant en orbite au-dessus de l'emplacement de l'au moins un émetteur de position local ($3_1$, $3_2$, $3_3$, ..., $3_n$), et

a) la réception d'au moins quatre signaux satellite réels ($4_1$, $4_2$, $4_3$, $4_4$) des au moins quatre satellites (S1, S2, S3, S4) choisis, et/ou
la génération d'au moins quatre signaux satellite artificiels imitant les signaux satellite réels des au moins quatre satellites (S1, S2, S3, S4) choisis,
lesdits au moins quatre signaux satellite réels reçus et/ou lesdits au moins quatre signaux satellite générés reçus étant lesdits signaux de navigation ($4_1$, $4_2$, $4_3$, $4_4$) qui sont envoyés à l'unité de préparation (2) au cours de l'étape d'envoi ($X_1$), ou
b) la réception de signaux satellite réels ($4_1$, $4_2$, $4_3$, $4_4$) issus d'un ou plusieurs des au moins quatre satellites (S1, S2, S3, S4) choisis combinée à la génération de signaux satellite artificiels imitant les signaux satellite réels issus d'un ou plusieurs des au moins quatre satellites (S1, S2, S3, S4) choisis, lesdits signaux satellite réels reçus et/ou lesdits signaux satellite générés reçus étant lesdits signaux de navigation ($4_1$, $4_2$, $4_3$, $4_4$) qui sont envoyés à l'unité de préparation (2) au cours de l'étape d'envoi ($X_1$), au moins quatre signaux de navigation ($4_1$, $4_2$, $4_3$, $4_4$) devant être présents au total.

5. Procédé selon la revendication 4, **caractérisé en ce que**, dans l'étape du choix, il est choisi les satellites (S1, S2, S3, S4) qui présentent un éloignement mutuel maximal et/ou qui émettent un signal de navigation ($4_1$, $4_2$, $4_3$, $4_4$) survenant selon un angle faisant de préférence plus de 5°, plus préférablement plus de 10°, encore plus préférablement plus de 20° à l'emplacement de l'émetteur de position local ($3_1$, $3_2$, $3_3$, ..., $3_n$) en direction du sol, et/ou qui sont disposés de préférence de façon équidistante.

6. Procédé selon la revendication 4 ou 5, **caractérisé en ce que**, dans le cadre de l'étape du choix, il est choisi des satellites (S1, S2, S3, S4) totalement ou au moins partiellement différents pour le premier émetteur de position local ($3_1$, $3_2$, $3_3$, ..., $3_n$) et chacun des autres émetteurs de position locaux ($3_1$, $3_2$, $3_3$, ..., $3_n$).

7. Procédé selon l'une des revendications précédentes, **caractérisé par** les aspects suivants :

- au moins un des émetteurs de position locaux ($3_1$, $3_2$, $3_3$, ..., $3_n$) fait partie d'une unité d'émission/réception faisant partie d'une station radio mobile et/ou la liaison entre l'unité de préparation (2) et au moins un des émetteurs de position locaux ($3_1$, $3_2$, $3_3$, ..., $3_n$) est une liaison permettant également de communiquer des données à une unité d'émission/réception d'une station radio mobile ; et/ou
- les émetteurs de position locaux ($3_1$, $3_2$, $3_3$, ..., $3_n$) sont au moins partiellement reliés par une liaison de données commune, notamment Ethernet, à l'unité de préparation (2).

8. Dispositif (1) permettant de produire et de fournir des informations de position individuelles à des fins de localisation reposant sur le système GNSS (géolocalisation et navigation par système de satellites), présentant les aspects suivants :

- il comprend une unité de préparation (2) et au moins deux ou au moins trois ou au moins quatre ou au moins cinq émetteurs de position locaux ($3_1$, $3_2$, $3_3$, ..., $3_n$), lesdits émetteurs de position locaux ($3_1$, $3_2$, $3_3$, ..., $3_n$) étant reliés à l'unité de préparation (2),
- l'unité de préparation (2) est conçue de manière qu'au moins quatre signaux de navigation différents ($4_1$, $4_2$, $4_3$, $4_4$) peuvent lui être envoyés, chacun d'entre eux correspondant à un signal satellite reposant sur le système GNSS,
- l'unité de préparation (2) est conçue pour produire au moins quatre signaux de navigation fonction de la destination, par décalage temporel d'au moins deux, trois ou des quatre des au moins quatre signaux de navigation différents ($4_1$, $4_2$, $4_3$, $4_4$) de manière que les informations de position reposant sur le système GNSS (géolocalisation et navigation par système de satellites) susceptibles d'en être obtenues correspondent à une destination choisie ;

**caractérisé par** les aspects suivants :

- l'unité de préparation (2) est conçue de manière à superposer les au moins quatre signaux de navigation fonction de la destination à un signal de navigation total modifié ($6_1$, $6_2$, $6_3$, ..., $6_n$),
- l'unité de préparation (2) est conçue de manière à transmettre le signal de navigation total modifié ($6_1$, $6_2$, $6_3$, ..., $6_n$) à l'un des au moins deux émetteurs de position locaux ($3_1$, $3_2$, $3_3$, ..., $3_n$),
- l'unité de préparation (2) est conçue pour générer, pour chaque émetteur de position local ($3_1$, $3_2$, $3_3$, ..., $3_n$) qui lui est associé, un signal de navigation total (61, 62, 63, ..., 6n) modifié individuellement adapté,
- les émetteurs de position locaux ($3_1$, $3_2$, $3_3$, ..., $3_n$) sont conçus pour émettre le signal de navigation total modifié ($6_1$, $6_2$, $6_3$, ..., $6_n$) qui leur a été transmis.

9. Dispositif selon la revendication 8, **caractérisé en ce que** les émetteurs de position locaux ($3_1$, $3_2$, $3_3$, ..., $3_n$) et l'unité de préparation (2) sont disposés dans des boîtiers séparés, le signal de navigation total modifié ($6_1$, $6_2$, $6_3$, ..., $6_n$) étant un signal de navigation total numérique ($6_1$, $6_2$, $6_3$, ..., $6_n$) et la génération du signal de navigation total numérique ($6_1$, $6_2$, $6_3$, ..., $6_n$) s'effectuant exclusivement dans l'unité de préparation (2) centralement pour tous les émetteurs de position locaux ($3_1$, $3_2$, $3_3$, ..., $3_n$) reliés à l'unité de préparation (2) et le signal de navigation total ($6_1$, $6_2$, $6_3$, ..., $6_n$) respectif étant transmis de manière numérique aux émetteurs de position locaux ($3_1$, $3_2$, $3_3$, ..., $3_n$) respectifs.

10. Dispositif selon la revendication 8 ou 9, **caractérisé en ce que** la destination se trouve à portée radio de l'au moins un émetteur de position local ($3_1$, $3_2$, $3_3$, ..., $3_n$).

11. Dispositif selon l'une des revendications 8 à 10, **caractérisé par** les aspects suivants :

- il comporte une unité de sélection (7) conçue pour choisir au moins quatre satellites (S1, S2, S3, S4) se trouvant en orbite au-dessus de l'emplacement de l'au moins un émetteur de position local ($3_1$, $3_2$, $3_3$, ..., $3_n$), et/ou
- l'unité de préparation (2) est conçue de manière à pouvoir recevoir au moins quatre signaux satellite réels ($4_1$, $4_2$, $4_3$, $4_4$) issus des au moins quatre satellites (S1, S2, S3, S4) choisis, ou
- l'unité de préparation (2) est conçue de manière à pouvoir recevoir au moins quatre signaux satellite générés de façon artificielle imitant les signaux satellite réels issus des au moins quatre satellites (S1, S2, S3, S4) choisis, ou
- l'unité de préparation (2) est conçue pour recevoir aussi bien des signaux satellite réels ($4_1$, $4_2$, $4_3$, $4_4$) issus d'un ou plusieurs des au moins quatre satellites (S1, S2, S3, S4) choisis que des signaux satellite générés de façon artificielle imitant les signaux satellite réels issus d'un ou plusieurs des au moins quatre satellites (S1, S2, S3, S4) choisis, et/ou
- les signaux satellite réels reçus et/ou les signaux satellite générés reçus sont lesdits signaux de navigation ($4_1$, $4_2$, $4_3$, $4_4$).

12. Dispositif selon la revendication 11, **caractérisé en ce que** l'unité de sélection (7) est conçue de manière à choisir des satellites (S1, S2, S3, S4) qui présentent un éloignement mutuel maximal et/ou qui émettent un signal satellite survenant selon un angle faisant de préférence plus de 5°, plus préférablement plus de 10°, encore plus préférablement plus de 20° à l'emplacement de l'émetteur de position local ($3_1$, $3_2$, $3_3$, ..., $3_n$) respectif en direction du sol, et/ou qui sont disposés de préférence de façon équidistante.

13. Dispositif selon la revendication 11 ou 12, **caractérisé en ce que** l'unité de sélection (7) est conçue de manière à choisir des satellites (S1, S2, S3, S4) totalement ou au moins partiellement différents pour le premier émetteur de position local ($3_1$, $3_2$, $3_3$, ..., $3_n$) et chacun des autres émetteurs de position locaux ($3_1$, $3_2$, $3_3$, ..., $3_n$).

14. Dispositif selon l'une des revendications 11 à 13, **caractérisé en ce qu'**au moins un émetteur de position local ($3_1$, $3_2$, $3_3$, ..., $3_n$) dispose de plusieurs antennes localement séparées, et

a) **en ce qu'**un signal de navigation total ($6_1$, $6_2$, $6_3$, ..., $6_n$) modifié respectif est envoyé par le biais d'une antenne respective, ladite unité de sélection (7) étant conçue de manière à permettre de choisir des satellites (S1, S2, S3, S4) totalement ou au moins partiellement différents pour les au moins quatre signaux de navigation différents ($4_1$, $4_2$, $4_3$, $4_4$) de chaque signal de navigation total modifié ($6_1$, $6_2$, $6_3$, ..., $6_n$) envoyé par le biais de chaque antenne, ou
b) **en ce que** le signal de navigation total modifié ($6_1$, $6_2$, $6_3$, ..., $6_n$) est envoyé successivement par le biais des plusieurs antennes localement séparées.

15. Dispositif selon l'une des revendications 8 à 14, **caractérisé en ce qu'**au moins un des émetteurs de position locaux ($3_1$, $3_2$, $3_3$, ..., $3_n$) fait partie d'une unité d'émission/réception faisant partie d'une station radio mobile et/ou, **en ce que** la liaison entre l'unité de préparation (2) et au moins un des émetteurs de position locaux ($3_1$, $3_2$, $3_3$, ..., $3_n$) est une liaison permettant également de communiquer des données à une unité d'émission/réception d'une station radio mobile, et/ou **en ce que** les émetteurs de position locaux ($3_1$, $3_2$, $3_3$, ..., $3_n$) sont au moins partiellement reliés par une liaison de données commune, notamment Ethernet, à l'unité de préparation (2).

**Fig. 1**

Fig. 2

Fig. 3

Fig. 4

EP 3 289 385 B1

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9738326 A1
- WO 2007030384 A2
- EP 2233943 A1
- DE 102012007205 B4